# EUROPEAN PATENT APPLICATION

(11) **EP 4 550 684 A1**
(43) Date of publication of application: **07.05.2025**
(21) Application number: 23842122.6
(22) Date of filing: 04.07.2023
(51) Int. Cl.: H04B 7/06

(54) **TRANSMISSION METHOD, COMMUNICATION NODE, AND STORAGE MEDIUM**

(30) Priority: 18.07.2022 CN 202210845022
(71) Applicant: ZTE Corporation, Shenzhen, Guangdong 518057 (CN)
(72) Inventor: LU, Zhaohua, Shenzhen, Guangdong 518057 (CN); XIAO, Huahua, Shenzhen, Guangdong 518057 (CN); ZHENG, Guozeng, Shenzhen, Guangdong 518057 (CN); LI, Yong, Shenzhen, Guangdong 518057 (CN)
(74) Representative: Aipex B.V.
(86) International application number: PCT/CN2023/105727
(87) International publication number: WO 2024/017057

(57) **Abstract**

Provided are a transmission method, a communication node, and a storage medium. The transmission method applied to a first communication node includes receiving K sets of reference signals; and determining predicted channel information of N ports according to the K sets of reference signals, where N > M₁ + M₂ + ... + M_{K}, N, M₁, M₂, ..., Mₖ are each a positive integer, and M_{K} denotes the number of ports corresponding to a k-th set of reference signals; k = 1, ..., K, and K is a positive integer.

## Description

### TECHNICAL FIELD

The present application relates to the field of communication technology, for example, a transmission method, a communication node, and a storage medium.

### BACKGROUND

The multi-antenna technology is a key technology for enhancing wireless communication systems. As wireless communication systems continue to evolve, the demand for higher spectrum efficiency increases, and the multi-antenna technology can improve the spectrum efficiency of wireless communication systems. However, as the number of antennas in use increases, the overhead of reference signals also grows.

Therefore, with the trend of increasing numbers of antennas, how to reduce the overhead of reference signals is currently an urgent problem to be solved.

### SUMMARY

The present application provides a transmission method, a communication node, and a storage medium.

In a first aspect, embodiments of the present application provide a transmission method. The transmission method is applied to a first communication node and includes the following:
K sets of reference signals are received.

Predicted channel information of N ports is determined according to the K sets of reference signals, where N > M₁ + M₂ + ... + M_{K}, N, M₁, M₂, ..., M_{K} are each a positive integer, and M_{K} denotes the number of ports corresponding to the k-th set of reference signals; k = 1, ..., K, and K is a positive integer.

In a second aspect, embodiments of the present application provide a transmission method. The transmission method is applied to a second communication node and includes the following:
K sets of reference signals are transmitted.

The K sets of reference signals are configured to determine predicted channel information of N ports, where N > M₁ + M₂ + ... + M_{K}, N, M₁, M₂, ..., M_{K} are each a positive integer, M_{K} denotes the number of ports corresponding to the k-th set of reference signals, k = 1, ..., K, and K is a positive integer.

Channel state information of the N ports or channel information of the N ports is acquired.

In a third aspect, an embodiment of the present application provides a communication node. The communication node includes at least one processor and a storage apparatus configured to store at least one program.

When executed by one or more processors, one or more programs cause the one or more processors to implement the method provided by the embodiments of the present application.

In a fourth aspect, an embodiment of the present application provides a storage medium. The storage medium stores a computer program that, when executed by a processor, implements the method provided by the embodiments of the present application.

### BRIEF DESCRIPTION OF DRAWINGS

FIG. 1 is a flowchart of a transmission method according to an embodiment of the present application.
FIG. 2a is a flowchart of another transmission method according to an embodiment of the present application.
FIG. 2b is a diagram of a predicted channel according to an embodiment of the present application.
FIG. 2c is a diagram of another predicted channel according to an embodiment of the present application.
FIG. 2d is a diagram illustrating the determination of predicted channel information according to an embodiment of the present application.
FIG. 2e is a diagram illustrating another determination of predicted channel information according to an embodiment of the present application.
FIG. 2f is a diagram of a port correspondence relationship according to an embodiment of the present application.
FIG. 2g is a diagram of another port correspondence relationship according to an embodiment of the present application.
FIG. 2h is a diagram of a reference signal transmission according to an embodiment of the present application.
FIG. 3 is a diagram illustrating the structure of a transmission apparatus according to an embodiment of the present application.
FIG. 4 is a diagram illustrating the structure of a transmission apparatus according to an embodiment of the present application.
FIG. 5 is a diagram illustrating the structure of a communication node according to an embodiment of the present application.

### DETAILED DESCRIPTION

Embodiments of the present application are described hereinafter in detail in conjunction with drawings. It is to be noted that if not in collision, embodiments of the present application and features therein may be combined with each other in any manner.

Procedures illustrated in flowcharts among the drawings may be executed by, for example, a computer system capable of executing a set of computer-executable instructions. Moreover, although logical sequences are illustrated in the flowcharts, the procedures illustrated or described may be performed in sequences different from those described herein in some cases.

The multi-antenna technology is a key technology for enhancing wireless communication systems. As wireless communication systems continue to evolve, the demand for higher spectrum efficiency increases, and the multi-antenna technology can improve the spectrum efficiency of wireless communication systems. However, as the number of antennas in use increases, such as 32 antennas, 64 antennas, and 128 antennas, the overhead of reference signals also grows. Currently, channel state information reference signal (CSI-RS) or sounding reference signal (SRS) is generally used to estimate channel state information. For example, the New Radio (NR) currently supports the CSI-RS with {1, 2, 4, 8, 12, 16, 24, 32} ports, with supported CSI-RS density values of 0.5, 1, and 2, and the CSI-RS configuration is user-specific or user group-specific. From the perspective of network-side equipment, the number of CSI-RS resource elements (REs) required may be greater than or equal to the number of antennas. The number of REs in a physical resource block (PRB) is limited, generally not more than 168. Therefore, with the trend of increasing numbers of antennas, how to reduce the overhead of reference signals is currently an urgent problem to be solved.

For ease of understanding, the concepts involved in the present application are introduced below.

In the present application, mobile communication networks include but are not limited to the 3rd generation mobile communication technology (3G), the 4th generation mobile communication technology (4G), the 5th generation mobile communication technology (5G), and future mobile communication networks. The network architectures of the mobile communication networks may include network-side devices (such as but not limited to base stations) and receiver-side devices (such as but not limited to terminal devices). It should be understood that in this example, the first communications node (which may also be referred to as a first communication node device) may be a terminal-side device, and the second communications node (which may also be referred to as a second communication node device) may be a base station-side device.

In the present application, a base station may be a base station in Long-Term Evolution (LTE) or Long-Term Evolution Advanced (LTE-A), an evolved base station (Evolutional Node B, eNodeB, or eNB), a base station device in a 5G network, or a base station in future communication systems. The base station may include various types of macro base stations, micro base stations, home base stations, remote radio remote unit, reconfigurable intelligent surfaces (RISs), routers, wireless fidelity (Wi-Fi) devices, primary cells, secondary cells, and other types of network-side devices, as well as location management function (LMF) devices.

In the present application, a terminal device (also referred to as a terminal) is a device having a wireless receiving-sending function. The device may be deployed on land, including being indoor or outdoor, handled, wearable, or car-mounted. The device may be deployed on water (for example, in ships) and may also be deployed in the air (for example, in airplanes, balloons, and satellites). The terminal may be a mobile phone, a pad, a computer having the wireless receiving-sending function, a virtual reality (VR) terminal, an augmented reality (AR) terminal, a wireless terminal in industrial control, a wireless terminal in self-driving, a wireless terminal in remote medical, a wireless terminal in a smart grid, a wireless terminal in transportation safety, a wireless terminal in a smart city, and a wireless terminal in a smart home. The application scenario is not limited by embodiments of the present application. The terminal may sometimes also be referred to a user, user equipment (UE), an access terminal, a UE unit, a UE station, a mobile station, a mobile platform, a remote station, a remote terminal, a mobile device, a UE terminal, a wireless communication device, a UE agent, or a UE apparatus. Embodiments of the present application do not impose a limitation.

In the embodiments, higher-layer signaling includes but is not limited to radio resource control (RRC) and media access control-control element (MAC CE). Physical layer signaling may be transmitted between a base station and a terminal. For example, physical layer signaling is transmitted on a physical downlink control channel (PDCCH) and a physical uplink control channel (PUCCH).

In the present application, indicators of various parameters may also be referred to as indexes or identifiers (ID), and they are completely equivalent concepts. The resource identifiers in a wireless system are an example. The resources of the wireless system include but are not limited to one of the following: a reference signal resource, a reference signal resource group, a reference signal resource configuration, a channel state information (CSI) report, a CSI report set, a terminal, a base station, a panel, a neural network, a sub-neural network, or a neural network layer. Each resource corresponds to an index. The base station may indicate one or a group of resource identifiers to the terminal through various higher-layer signaling or physical layer signaling.

In some embodiments, artificial intelligence (AI) includes self-learning devices, components, software, and modules such as machine learning (ML), deep learning, reinforcement learning, transfer learning, deep reinforcement learning, and meta-learning. In some embodiments, artificial intelligence is implemented through an artificial intelligence network (also referred to as a neural network). The neural network includes multiple layers, and each layer includes at least one node. In an example, the neural network includes an input layer, an output layer, and at least one hidden layer. Each layer of the neural network includes but is not limited to at least one of a full connection layer, a dense layer, a convolutional layer, a transposed convolutional layer, a direct connection layer, an activation function, a normalization layer, and a pooling layer. In some embodiments, each layer of the neural network may include a sub-neural network, such as a residual network block or resnet block, a densenet block, and a recurrent neural network (RNN). The artificial intelligence network includes a neural network model and/or neural network parameters corresponding to the neural network model. The neural network model may be referred to as the network model, and the neural network parameters may be referred to as network parameters. A network model defines the architecture of the neural network such as the number of layers of the neural network, the size of each layer, the activation function, the connectivity, the size and stride of the convolutional kernel, and the type of convolution (such as 1-dimensional (D) convolution, 2D convolution, 3D convolution, atrous convolution, transposed convolution, separable convolution, grouped convolution, and dilated convolution). Network parameters are the weights and/or biases of each layer in the network model and the values thereof. A network model may correspond to multiple different sets of neural network parameter values to adapt to different scenarios. A network model may correspond to multiple different sets of neural network parameter values. The parameters of the neural network may be acquired through online or offline training. For example, by inputting at least one sample and label, the neural network model is trained to acquire the neural network parameters.

In some embodiments, the slot may be a slot or a mini slot. A slot or a mini slot consists of at least one symbol. The symbol herein refers to a time unit in a sub-frame, a frame, or a slot. For example, the symbol may be an orthogonal frequency-division multiplexing (OFDM) symbol, a single-carrier frequency-division multiple access (SC-FDMA) symbol, or an orthogonal frequency-division multiple access (OFDMA) symbol.

In some embodiments, transmission includes sending or receiving, such as sending data or signals or receiving data or signals.

In some examples, the antenna is a physical antenna. In some examples, the antenna is a logical antenna. In some examples, ports and antennas may be interchangeable concepts. In some examples, the antenna is a transmitting antenna. In some examples, the antenna is a receiving antenna. In some examples, the antenna includes an antenna pair of a transmitting antenna and a receiving antenna. In some examples, the antenna may be a uniform linear array. In some examples, the antenna is a uniform planar array (such as including Ng rows and Mg columns, where Ng and Mg are positive integers). In some examples, the antenna is a uniform circular array. In some examples, the antenna may be a non-uniform linear array. In some examples, the antenna is a non-uniform planar array. In some examples, the antenna is a non-uniform circular array. In some examples, the antenna is a directional antenna. In some examples, the antenna is an omnidirectional antenna. In some examples, the antenna is a dual-polarized antenna. In some examples, the antenna is a single-polarized antenna. In some embodiments, the arrangement of antennas is referred to as the topology of antennas or the topological arrangement of antennas, and the antenna topology may be configured by a base station. The base station, by receiving the antenna topology, acquires the number of rows and columns of antennas of the base station, whether the antennas are a linear array, a planar array, or a circular array, and whether the antennas are arranged uniformly or non-uniformly.

In some embodiments, to calculate channel state information or perform operations such as channel estimation, mobility management, and positioning, the base station or the user needs to send a reference signal (RS). The reference signal includes but is not limited to a channel state information reference signal (CSI-RS). The CSI-RS includes a zero power CSI-RS (ZP CSI-RS) and a non-zero power CSI-RS (NZP CSI-RS), a channel state information-interference measurement signal (CSI-IM), a sounding reference signal (SRS), a synchronization signals block (SSB), a physical broadcast channel (PBCH), and a synchronization broadcast block/physical broadcast channel (SSB/PBCH). The NZP CSI-RS may be used to measure channels or interference. The CSI-RS may be used for tracking, called the CSI-RS for Tracking (TRS). The CSI-IM is generally used to measure interference. The SRS is used for channel estimation. In addition, the resource element (RE) set included in the time-frequency resources used to transmit reference signals is referred to as reference signal resources, such as a CSI-RS resource, an SRS resource, a CSI-IM resource, and an SSB resource. In this specification, the SSB includes a synchronization signal block and/or a physical broadcast channel.

In some embodiments, in a communication system, a resource for transmitting a reference signal may be referred to as a reference signal resource. To save signaling overhead, multiple reference signal resources may be divided into multiple sets (such as a CSI-RS resource set, a CSI-IM resource set, and an SRS resource set). Each reference signal resource set includes at least one reference signal resource. The multiple reference signal resource sets may be from the same reference signal resource setting (such as CSI-RS resource setting, SRS resource setting, or CSI-RS resource setting, where the CSI-IM resource setting and the CSI-IM resource setting may be combined together and both referred to as the CSI-RS resource setting) to configure parameter information.

In some embodiments, the base station configures the measurement resource information, and the measurement resource information is used for acquiring the channel state information. The measurement resource information includes C_{N} pieces of channel measurement resource (CMR) information and C_{M} pieces of interference measurement resource (IMR) information, where C_{N} and C_{M} are positive integers. The base station configures the measurement resource information in a report configuration (report config) or a reporting setting.

In some examples, to better transmit data or signals, the base station or terminal needs to acquire channel state information. The channel state information may include at least one of the following: a CSI-RS resource indicator (CRI), a synchronization signal block resource indicator (SSBRI), reference signal received power (RSRP), differential RSRP, a channel quality indicator (CQI), a precoding matrix indicator (PMI), a layer indicator (LI), a rank indicator (RI), a level 1 signal-to-interference-plus-noise ratio (L1-SINR), or a differential L1-SINR. Here, the precoding matrix indicator is a type of precoding information, specifically in cases where the precoding information is based on a codebook, such as a first type of precoding information. Precoding information also includes methods implemented without a codebook, such as a second type of precoding information. In an example, the CSI including only the first type of precoding information is referred to as a first type of CSI. In an example, the CSI including the second type of precoding information is referred to as a second type of CSI.

In some embodiments, the terminal and the base station transmit channel state information matched with the channel through the first type of precoding information. The first type of precoding information is precoding information based on traditional channel characteristic matrices or the quantized values of characteristic matrices. Codebook-based methods are an example. The codebook may be, for example, the codebook for N antennas in LTE, where N may be 2, 4, 8, 12, 16, 24, 32; or the type I codebook, type II codebook, type II port selection codebook, enhanced type II codebook, enhanced type II selection codebook, and further enhanced type II selection codebook in NR. The codebook herein includes L codewords, and the main idea is that the base station and the terminal save L codewords in advance according to a prescribed formula, table, or dictionary. In some examples, the codeword is a vector. In some examples, the codeword is a matrix, the matrix includes r columns, and each column is also a vector. Optionally, each column of the matrix is mutually orthogonal. In some examples, the vector constituting the codeword is a 0-1 vector, where only one value in the entire vector is 1, and all other values are zero. In some examples, the vector constituting the codeword is a discrete Fourier transform (DFT) vector. In some examples, the vector constituting the codeword is acquired by the Kronecker product of two or more DFT vectors. In some examples, the vector constituting the codeword is obtained by connecting two or more DFT vectors by multiplying different phase rotations. In some examples, the vector constituting the codeword is acquired by taking the Kronecker product of two or more DFT vectors and multiplying by phase rotations. The base station or terminal, by searching L codewords, finds the codeword that best matches the channel as the optimal codeword to transmit data or signals. The codeword matched to the channel herein includes but is not limited to at least one of the following: The distance between the codeword and the channel is the smallest, the correlation between the codeword and the channel is the largest, the distance between the codeword and the optimal right singular vector or matrix of the channel is the smallest, the correlation between the codeword and the optimal right singular vector or matrix of the channel is the largest, or the codeword yields the maximum signal-to-noise ratio when calculated with the channel. L is an integer greater than 1, generally greater than the number of transmitting antennas.

In some examples, the terminal and the base station transmit channel state information matched to the channel through the second type of precoding information. The second type of precoding information is channel state information acquired based on AI. In an example, the base station and the terminal acquired channel state information through the encoder of an autoencoder, and the autoencoder includes an encoder and a decoder, where the encoder is at the terminal and the decoder is at the base station side. The terminal compresses the obtained channel H through the encoder to obtain the compressed H1 and quantizes the compressed channel H1 and feeds H1 back to the base station. The base station receives the quantized H1, de-quantizes H1, and inputs H1 into the decoder, and the decoder decompresses H1, thereby restoring H. In an example, H includes K0 elements, and the terminal selects K elements from H as H1, quantizes H1, and feeds H1 back. The base station receives and de-quantizes the K quantized elements and inputs the dequantized K elements into the target module. The target module outputs K0 elements to restore H and thereby obtain the precoding matrix for H. K and K0 are integers greater than 1, and K < K0. Here, the H1 obtained through the compressor or the K elements selected from H are both the second type of precoding information. For simplicity, the quantized H1 is also referred to as the second type of precoding information. In an example, the second type of precoding information may also be a precoding matrix different from the first type of precoding information and generated by other non-AI methods. In an example, the second type of precoding information may also be a precoding matrix other than the first type of precoding information.

In some examples, for transmitting CSI, such as the terminal feeding back CSI and the base station receiving CSI, the terminal and the base station need to define a CSI report (CSI report or CSI report congfig). The CSI report defines at least one of the following parameters: time-frequency resources for CSI feedback, reportQuantity included in CSI, the time domain category (reportConfigType) of CSI feedback, measurement channel resources, measurement interference resources, the size of the measurement bandwidth, or other information. The CSI report may be transmitted on uplink transmission resources. The uplink transmission resources are resources used for transmitting uplink signaling or data, including but not limited to a PUSCH and a PUCCH. The CSI report also includes time domain characteristics, including a periodic CSI report (P-CSI), an aperiodic CSI report (AP-CSI), and a semi-persistent CSI report (SP-CSI). Generally, the number of bits transmitted by the P-CSI is relatively small and the bits are transmitted on the PUCCH, while the number of bits transmitted by the A-CSI is larger and the bits are generally transmitted on the PUSCH. The SP-CSI may be transmitted based on the PUSCH or PUCCH. The P-CSI transmitted based on the PUCCH is generally configured by higher-layer signaling (radio resource control (RRC)). The SP-CSI transmitted based on the PUCCH is also configured or activated by higher-layer signaling (the RRC and/or MAC CE). The SP-CSI or A-CSI transmitted based on the PUSCH are triggered by physical layer signaling (downlink control information (DCI)). The DCI is generally transmitted on a physical downlink control channel (PDCCH).

In some embodiments, feedback of channel state or channel information through a CSI report may refer to carrying the channel state or channel information on an uplink transmission resource indicated by the CSI report and transmitting the channel state or channel information through the uplink transmission resource. In some embodiments, feedback of channel state or channel information may refer to carrying the channel state or channel information on an uplink transmission resource and transmitting the channel state or channel information through the uplink transmission resource.

In some embodiments, the base station configures the terminal with N CSI reports that need to be fed back to the base station through higher-layer signaling and/or physical layer signaling. Each CSI report has an identity (ID), referred to as the CSI reportID. The terminal 'may select M CSI reports from the N CSI reports according to the terminal's computing power or processing power and the requirements of the base station. The terminal feeds back at least one of these M CSI reports according to the uplink feedback resources, where N and M are positive integers, and M <= N. In an example, M CSI reports need to be fed back, but the feedback resources of at least two of the M reports are conflicting. The conflict of feedback resources of the two reports means that at least one symbol and/or at least one subcarrier in the transmission resources (such as the PUCCH or PUSCH) used to feedback the two corresponding reports is the same.

In some examples, the channel information is information acquired based on a reference signal (such as a CSI-RS) for describing the channel environment between communication nodes, such as a time domain channel matrix and a frequency domain channel matrix. In some examples, the channel information is a complex matrix related to the number of transmitting antennas Nt, the number of receiving antennas Nr, and resource elements (REs). For example, at least one (Nr × Nt) channel matrix is present in a physical resource block. The base station sends a reference signal for channel measurement on one slot. The terminal receives the reference signal for channel measurement on the slot. The channel information H of the corresponding slot is acquired according to the received reference signal.

In some embodiments, a piece of channel information is channel information of N ports or channel information of N transmitting ports, indicating that the channel information is channel information for N transmitting ports. For example, on each RE or PRB, the channel information of N ports is an Nr*N complex matrix.

In some embodiments, a piece of channel information is the channel information of M receiving ports, mainly indicating that the channel information is channel information for M receiving ports. For example, on each RE or PRB, the channel information of the M receiving ports is an M*Nt complex matrix. In some embodiments, the neural network may predict an Nr1*Nt1 matrix as a piece of channel information of Nr*Nt, where Nr1, Nt1, Nt, and Nr are positive integers, and Nt1 < Nt and/or Nr1 < Nr. In this case, the channel information may be referred to as the channel information of N transmitting ports and M receiving ports.

In some examples, the channel information acquired from a reference signal may be determined as predicted channel information by a target module. In some examples, the channel information acquired from the reference signal includes first channel information, second channel information, i-th channel information, and so on, where i = 1, ..., K. Generally speaking, the number of ports corresponding to the channel information acquired from the reference signal is less than the predicted channel information. In some examples, the target module is a functional module that can be implemented based on artificial intelligence, for example, implemented based on the target module and implemented based on a neural network. In some examples, the target module may be implemented based on some nonlinear mapping relationships. The nonlinear mapping relationships map the input channel information to the output predicted channel information through a series of nonlinear operations. The channel information includes but is not limited to one of a channel matrix, a time-domain channel matrix, and a frequency-domain channel matrix. In some examples, the target module may also be referred to as operation, processing, and mapping, etc. The function of the target module may be to process the channel information of M ports into the predicted channel information of N ports, where M is less than N.

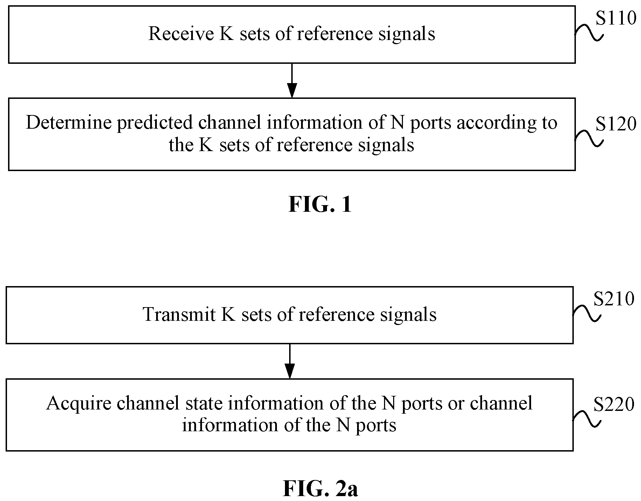

In an exemplary embodiment, FIG. 1 is a flowchart of a transmission method according to an embodiment of the present application. The method provided in this embodiment is applied to a first communication node. The method includes operations S110 and S120.

In S110, K sets of reference signals are received.

K is a positive integer. The first communication node may receive K sets of reference signals from a second communication node. The first communication node may be a terminal device. The second communication node may be a base station.

The number of ports corresponding to the K sets of reference signals may be the same or different.

In S120, predicted channel information of N ports is determined according to the K sets of reference signals.

N > M₁ + M₂ + ... + M_{K}, N, M₁, M₂, ..., M_{K} are each a positive integer, and Mₖ denotes the number of ports corresponding to the k-th set of reference signals. k = 1, ..., K, and K is a positive integer.

After receiving K sets of reference signals, the predicted channel information of N ports greater than the sum of the number of ports corresponding to the K sets of reference signals may be determined based on the K sets of reference signals.

The predicted channel information may be considered as the channel information predicted by the first communication node based on the K sets of reference signals. Based on the predicted channel information, the corresponding channel state information may be determined and fed back to the second communication node, or the predicted channel information may be fed back to the second communication node. Channel information may be considered as information after channel parameterization.

In an embodiment, K = 2, and based on 2 sets of reference signals, the predicted channel information of N ports is determined.

In an embodiment, K = 1, and based on 1 set of reference signals, the predicted channel information of N ports is determined.

The predicted channel information may be determined in conjunction with the target module.

In an embodiment, the first communication node may transmit the first channel information of M₁ ports corresponding to a first set of reference signals to the second communication node, and the second communication node may determine the predicted channel information of N ports after acquiring the first channel information.

In an embodiment, the first communication node may transmit the first channel information of less than M₁ ports to the second communication node, and the second communication node may determine the predicted channel information of N ports after acquiring the first channel information of less than M₁ ports.

In an embodiment, the first communication node may directly determine the predicted channel information of N ports based on K sets of reference signals. For example, the channel information corresponding to K sets of reference signals is determined, and then the predicted channel information of N ports is determined based on the target module.

In the transmission method provided in the embodiments of the present application, the first communication node determines the predicted channel information of N ports based on the received K sets of reference signals and achieves the prediction of the channels of N ports using a smaller number of ports (that is, the ports corresponding to the K sets of reference signals), thereby reducing the overhead of reference signals.

Based on the preceding embodiments, variant embodiments of the preceding embodiment are provided. It is to be noted here that for ease of description, only differences from the preceding embodiment are described in the variant embodiments.

In an embodiment, the K sets of reference signals have the same quasi-co-location configuration.

In an embodiment, determining the predicted channel information of the N ports according to the K sets of reference signals includes determining the i-th channel information Hᵢ of Mᵢ ports according to the i-th set of reference signals, where i = 1, ..., K; and determining the predicted channel information of the N ports according to the i-th channel information Hᵢ, where i = 1, ..., K (that is, determining the predicted channel information of the N ports according to H₁, ..., H_{K}). Mᵢ is a positive integer, i = 1, ..., K, and K is a positive integer.

In an embodiment, determining the predicted channel information of the N ports according to the K sets of reference signals includes determining i-th channel information Hᵢ of Mᵢ ports according to the i-th set of reference signals; determining the i-th predicted channel information Pᵢ of Nᵢ ports according to the i-th channel information Hᵢ, where i = 1, ..., K; and combining the i-th predicted channel information Pᵢ to obtain the predicted channel information of the N ports (that is, obtaining the predicted channel information of N ports by combining P₁, ..., P_{K}). Nᵢ and Mᵢ are each a positive integer, Nᵢ is not less than Mᵢ, i = 1, ..., K, and K is a positive integer.

In the present application, 1, ..., K may be considered as 1, 2, 3 ..., K, and P₁, ..., P_{K} may be considered as P₁, P₂, ..., P_{K}. The step size may be a set value or 1.

In an embodiment, determining the predicted channel information of the N ports according to the K sets of reference signals includes determining the first channel information of M₁ ports according to a first set of reference signals; determining the second channel information of M₂ ports according to a second set of reference signals; and determining the predicted channel information of the N ports according to the first channel information and the second channel information.

This embodiment does not limit the division of the first set of reference signals and the second set of reference signals in the K sets of reference signals. If the reference signal is a CSI-RS, each set of CSI-RSs has a CSI-RS resource ID. The first set of CSI-RSs and the second set of CSI-RSs in the K sets of CSI-RSs may be determined based on the IDs of the CSI-RSs. For example, the one with the smallest ID is the first set of CSI-RSs, the one with an ID only larger than the ID of the first set of CSI-RSs is the second set of CSI-RSs, and so on. That is, the IDs of multiple sets of CSI-RSs are sorted in ascending order, and the multiple sets of CSI-RSs are sequentially labeled as the first set of CSI-RS, the second set of CSI-RS, and so on.

The first channel information is the channel information corresponding to the first set of reference signals. The second channel information is the channel information corresponding to the second set of reference signals.

In this embodiment, when the predicted channel information is determined based on the first channel information and the second channel information, the determination may be made based on the target module.

In an embodiment, the first channel information and the second channel information are input into the target module to obtain the predicted channel information of N ports.

On each resource element (RE), the first channel information is a complex matrix of Nr*M₁, the second channel information is a complex matrix of Nr*M₂, and the predicted channel information is a complex matrix of Nr*N, where Nr denotes the number of receiving ports, Nr is a positive integer, K = 2, M₁, M₂, N are positive integers, and M₁ + M₂ < N.

In an embodiment, determining the predicted channel information of the N ports according to the K sets of reference signals includes determining the first channel information of M₁ ports according to a first set of reference signals; determining the second channel information of M₂ ports according to a second set of reference signals; determining the first predicted channel information of N₁ ports according to the first channel information; determining the second predicted channel information of N₂ ports according to the second channel information; and combining the first predicted channel information and the second predicted channel information to obtain the predicted channel information of the N ports, where N₁ and N₂ are each a positive integer, N₁ + N₂ = N, and M₁ and M₂ satisfy at least one of the following conditions: M₁ < N₁ or M₂ < N₂.

The first predicted channel information may be considered as channel information determined based on the first channel information. The second predicted channel information may be considered as channel information determined based on the second channel information. The first predicted channel information and the second predicted channel information may be combined (such as splicing, connecting, and merging) to obtain predicted channel information of N ports.

In an embodiment, the first predicted channel information and the second predicted channel information may be determined by a target module.

In an embodiment, the first channel information is input into the target module to obtain the first predicted channel information of N₁ ports.

In an embodiment, the second channel information is input into the target module to obtain the second predicted channel information of N₂ ports.

In an embodiment, determining the predicted channel information of the N ports according to the K sets of reference signals includes determining the first channel information of M₁ ports according to the K sets of reference signals; and determining the predicted channel information of the N ports according to the first channel information, where K = 1, M₁ and N are each a positive integer, and M₁ < N.

In this embodiment, the predicted channel information of N ports is determined based on one set of reference signals.

When the predicted channel information is determined based on the first channel information, the determination may be made based on the target module.

In an embodiment, the first channel information is input into the target module to obtain the predicted channel information of N ports.

In an embodiment, the method also includes determining channel state information of the N ports according to the predicted channel information of the N ports; and transmitting the channel state information of the N ports.

After the channel state information of the N ports is determined, the first communication node may transmit the channel state information to the second communication node.

In an embodiment, the channel state information includes a first type of precoding information or a second type of precoding information.

In an embodiment, determining the predicted channel information of the N ports according to the K sets of reference signals includes determining the first channel information of M₁ ports according to a first set of reference signals, and transmitting the first channel information of the M₁ ports; where the first channel information of the M₁ ports is configured to determine the predicted channel information of the N ports. M1 and N are each an integer greater than 1, M1 is less than N, and K = 1.

In this embodiment, when the predicted channel information is determined, the first channel information may be determined based on the first set of reference signals, and then the first channel information is transmitted to the second communication node so that the second communication node can determine the predicted channel information based on the first channel information. After determining the predicted channel information, the second communication node may transmit the predicted channel information to the first communication node.

The second communication node may determine the predicted channel information based on AI and/or ML technology. For example, the predicted channel information of N ports is determined based on the first AI system.

In an embodiment, the method also includes transmitting the first indication information, where the first indication information is configured to indicate the type of transmitted information. The type of transmitted information includes channel information or channel state information. The channel state information includes a first type of precoding information and a second type of precoding information. In an example, the first indication information includes two values, and the first indication information may indicate whether the transmission resource transmits channel information or channel state information. In an example, if the channel state information is further classified, the first indication information includes three values, that is, the first indication information is used to indicate channel information, the first type of precoding information, and the second type of precoding information. The communication node may use the first indication information to indicate whether the transmission resource transmits one of channel information, the first type of precoding information, and the second type of precoding information.

The first indication information is one of the following: physical layer signaling, a field of physical layer signaling, higher-layer signaling, a field in higher-layer signaling, and a field corresponding to a CSI report, where the field includes at least one bit. In an example, the first indication information includes two values. The field value is the first value, indicating that the transmission information corresponding to the CSI report is channel information. The field value is the second value, indicating that the transmission information corresponding to the CSI report is channel state information. In an example, the first indication information includes three values. The field value is the first value, indicating that the transmission information corresponding to the CSI report is channel information. The field value is the second value, indicating that the transmission information corresponding to the CSI report is the first type of precoding information. The field value is the third value, indicating that the transmission information corresponding to the CSI report is the second type of precoding information. The first value, the second value, and the third value here may be Boolean values, integer values, or real values. In an example, the first value is FALSE, and the second value and/or the third value are TRUE. In an example, the first value is 0, and the second value and the third value are different non-zero values. In an example, the first value is TRUE, and the second value and/or the third value are FLASE. In an example, the first value is a non-zero value, and the second value and/or the third value are 0.

One or more of the first indication information, channel state information, or channel information may be transmitted to the second communication node together or may be transmitted to the second communication node separately.

In an embodiment, determining the predicted channel information of the N ports according to the K sets of reference signals includes determining the first channel information of M₁ ports according to a first set of reference signals; determining the first channel information of Mₛ ports according to the first channel information of the M₁ ports; and transmitting the first channel information of the Mₛ ports, where the first channel information of the Mₛ ports is configured to determine the predicted channel information of the N ports, M₁ and Mₛ are each an integer greater than 1, M₁ is greater than Mₛ, and K = 1.

In this embodiment, the first channel information of Mₛ ports is transmitted so that the second communication node can determine the predicted channel information of N ports. That is, the first communication node selects a port from the configured ports and transmits the corresponding channel information to the second communication node. In an embodiment, the method also includes acquiring topology configuration information of the ports. The topology configuration information of the ports includes at least one of the following: the value of Mᵢ and the value of N; the number of rows of Mᵢ ports and the number of columns of the Mᵢ ports; the number of rows of the N ports and the number of columns of the N ports; position information of Mᵢ ports among the N ports; or the arrangement manner of the ports. Mᵢ and N are each an integer greater than 1, and i is greater than or equal to 1 and less than or equal to K.

The position information may be an index. The second communication node transmits the topology configuration information of the ports of the second communication node to the first communication node. The topology configuration information may be considered as information representing the port topology, such as the number of rows and columns in the antenna array, the number of panels, the downtilt angle of the antenna array, the slant angle of the antenna array, and the bearing angle of the antenna array.

In an embodiment, the position information of the Mᵢ ports among the N ports includes one of the following: The Mᵢ ports correspond to ports in one polarization direction among the N ports; the Mᵢ ports correspond to odd-indexed ports among the N ports; the Mᵢ ports correspond to even-indexed ports among the N ports; a row of the Mᵢ ports corresponds to odd-indexed ports or even-indexed ports in a row of the N ports; a column of the Mᵢ ports corresponds to odd-indexed ports or even-indexed ports in a column of the N ports; the Mᵢ ports correspond to odd-row ports or even-row ports among the N ports; or the Mᵢ ports correspond to odd-column ports or even-column ports among the N ports. Mᵢ and N are each an integer greater than 1, and i is greater than or equal to 1 and less than or equal to K.

In an embodiment, receiving the K sets of reference signals includes periodically receiving the K sets of reference signals, where the K sets of reference signals have the same number of ports.

K sets of reference signals are received in one slot, and multiple K sets of reference signals are received in different slots. In this embodiment, K sets of reference signals are received periodically.

In an embodiment, periodically receiving the K sets of reference signals includes receiving K sets of reference signals of W₁₁ ports in odd periods; and receiving K sets of reference signals of W₁₂ ports in even periods, where K is a positive integer, and W₁₁ and W₁₂ are different positive integers.

In an embodiment, periodically receiving the K sets of reference signals includes receiving K sets of reference signals of Q₁ ports for X consecutive periods, and then receiving K sets of reference signals of Q₂ ports for Y consecutive periods, where X, Y, and K are each a positive integer, and Q₁ and Q₂ are different positive integers. In an example, X = 1, and Y = 1. In an example, X > 1, and Y = 1. In an example, X = 1, and Y > 1.

In an example, one set of reference signals in the K sets of reference signals is received in one period. For example, the reference signal periods are grouped into sets of K periods. A set of K periods is referred to as a large period of length K. That is, during one large period, one set of reference signals is received in each of the K periods. After completing one large period, the process moves to the next large period, and repetition is made in this manner.

In an embodiment, receiving the K sets of reference signals includes semi-persistently receiving the K sets of reference signals, where the K sets of reference signals have the same number of ports, and K is a positive integer.

In an embodiment, semi-persistently receiving the K sets of reference signals includes receiving K sets of reference signals of M₃₁ ports in odd periods; receiving K sets of reference signals of M₃₂ ports in even periods; and during the semi-persistent period with a duration of C, transmitting K sets of reference signals for the first target number of ports in the C-th period. M₃₁ and M₃₂ are positive integers. Transmitting K sets of reference signals for the first target number of ports in the C-th period may be receiving K sets of reference signals for the first target number of ports in the C-th period.

In an embodiment, the first target number is determined based on the parity of C, the size of M₃₁, and the size of M₃₂.

This embodiment does not limit how to determine the first target number based on the parity of C, the size of M₃₁, and the size of M₃₂.

In an embodiment, when C is an odd number, K sets of reference signals for M₃₁ ports are transmitted (such as received) in the C-th period, or K sets of reference signals for M₃₂ ports are transmitted (such as received); when C is an even number, K sets of reference signals for M₃₁ ports are transmitted (such as received) in the C-th period, or K sets of reference signals for M₃₂ ports are transmitted (such as received); the first target number is the larger number of M₃₁ and M32.

In an embodiment, semi-persistently receiving the K sets of reference signals includes receiving K sets of reference signals of W₁ ports for S consecutive periods, and then receiving K sets of reference signals of W₂ ports for L consecutive periods. S, L, and K are each a positive integer, and W₁ and W₂ are different positive integers.

In an embodiment, a consecutive period of semi-persistently receiving the K sets of reference signals is C periods, and semi-persistently receiving the K sets of reference signals includes one of the following: transmitting the K sets of reference signals of the W₂ ports in the C-th period; transmitting the K sets of reference signals of the W₁ ports in the C-th period; where C, S, and L are each a positive integer, and S + L ≤ C; or during the semi-persistent period with a duration of C, sending the second target number of K sets of reference signals in the C-th period.

In an embodiment, the second target number is determined based on whether C is an integer multiple of the sum of S and L, the size of W₁, and the size of W₂.

This embodiment does not limit how to determine the second target number based on whether C is an integer multiple of the sum of S and L, the size of W₁, and the size of W₂.

In an embodiment, in the case where C is an integer multiple of the sum of S and L, K sets of reference signals of W₁ or W₂ ports are transmitted (such as received) in the C-th period; in the case where C is not an integer multiple of the sum of S and L, K sets of reference signals of W₁ or W₂ ports are transmitted (such as received) in the C-th period; the second target number is the larger number of W₁ and W₂.

In an embodiment, in the case where C is an integer multiple of (S + L), the K sets of reference signals of the W₂ ports are transmitted in a C-th period; and in the case where C is not an integer multiple of (S + L), the K sets of reference signals of W₁ or W₂ ports are transmitted in the C-th period according to a preset rule.

In an example, C semi-persistent periods are divided into K groups, and one set of reference signals in the K sets of reference signals is received in one period of a group of periods. Each K periods is a group, which is referred to as a large period of length K. That is, during one large period, one set of reference signals is received in each of the K periods. After completing one large period, the process moves to the next large period, and repetition is made in this manner until the C-th period. C is a multiple of K. If C is not a multiple of K, at least one set of reference signals may not be received in the last large period.

No limitation is imposed to the preset rule here, and the preset rule may be set as required.

In an embodiment, the method of determining the predicted channel information of the N ports according to the K sets of reference signals includes determining channel state information of M₁ ports according to a first set of reference signals, and transmitting the channel state information of the M₁ ports, such as sending the channel state information of M₁ ports, where the channel state information of the M₁ ports is configured to determine the predicted channel information of the N ports; sending the channel state information of M₁ ports and instructing the second communication node to determine the predicted channel information of the N ports.

In an embodiment, the method also includes transmitting second indication information, where the second indication information is used to indicate the type of channel state information. The type of channel state information at least includes a first type of precoding information and a second type of precoding information. For example, the type of channel state information transmitted by the communication node may be indicated by the value of the second indication information. When the second indication information takes the first value, the communication node transmits the first type of precoding information, and when the second indication information takes the second value, the communication node transmits the second type of precoding information.

In an exemplary embodiment, the first value is 0 and the second value is 1, the first value is 0 and the second value is a non-zero value, or the first value is FALSE and the second value is TRUE. The first value and the second value may also be real values of other situations, as long as the two situations can be distinguished.

In an exemplary embodiment, the terminal feeds back the second indication information, the second indication information takes the first value, the terminal determines the channel information as the first type of precoding information and feeds back the first type of precoding information, and the base station receives the second indication information and the first type of precoding information.

In an exemplary embodiment, the terminal feeds back the second indication information, the second indication information takes the second value, and the terminal determines the channel information as the second type of precoding information and feeds back the second type of precoding information. The base station receives the second indication information used to describe the type of the channel state information and the second type of precoding information.

In some examples, the second indication information may also take a third value, which is used to indicate that the terminal transmits the channel state information selected by the ports.

In some examples, the second indication information also includes a fourth value, which is used to indicate that the terminal transmits the channel information selected by the ports. The first value, the second value, and/or the third value, and/or the fourth value are different integers or different real numbers.

The second indication information may be one of the following: physical layer signaling, a field of physical layer signaling, higher-layer signaling, a field in higher-layer signaling, and a field corresponding to a CSI report, where the field includes at least one bit.

Different values of the second indication information may correspond to different indications. For example, when the second indication information is the third value, the second indication information indicates that the first communication node transmits the channel state information selected by the ports. When the second indication information is the fourth value, the second indication information indicates the following information to the second communication node: the first communication node transmits the channel information selected by the ports.

In an embodiment, if the first communication node cannot output the channel information of N ports due to capability problems or changes in the scene, or the output channel information of N ports causes the estimated channel information H, also referred to as the predicted channel information H, to differ greatly from the actual channel, the first communication node may send the second indication information.

In an exemplary embodiment, the present application also provides a transmission method. FIG. 2a is a flowchart of another transmission method according to an embodiment of the present application. The method is applied to the second communication node and includes S210 and S220.

In S210, K sets of reference signals are transmitted.

K is a positive integer. The second communication node may transmit K sets of reference signals to the first communication node.

The K sets of reference signals are configured to determine predicted channel information of N ports, where N > M₁ + M₂ + ... + M_{K}, N, M₁, M₂, ..., M_{K} are each a positive integer, and Mₖ denotes the number of ports corresponding to the k-th set of reference signals.

In S220, channel state information of the N ports or channel information of the N ports is acquired.

In an embodiment, the channel state information of N ports may be determined by the second communication node or may be determined by the first communication node and then transmitted to the second communication node.

In an embodiment, acquiring the channel state information of the N ports includes receiving the channel state information of the N ports fed back by a first communication node.

In an embodiment, acquiring the channel state information of the N ports includes receiving first channel information; determining the predicted channel information corresponding to the N ports according to the first channel information; determining the channel state information of the N ports according to the predicted channel information corresponding to the N ports; where the first channel information is channel information of M₁ ports, M₁ and N are each a positive integer, and M₁ < N; or the first channel information is channel information of Mₛ ports, Mₛ is a positive integer, and Mₛ < M₁ < N.

In an embodiment, acquiring the channel state information of the N ports includes receiving the first channel information of M₁ ports corresponding to the first set of reference signals, and determining the channel state information of N ports based on the first channel information of M₁ ports.

In an embodiment, acquiring the channel state information of the N ports includes receiving the channel state information of M₁ ports corresponding to the first set of reference signals, and determining the channel state information of N ports based on the channel state information of M₁ ports.

In an embodiment, the channel state information or channel information corresponding to multiple sets of reference signals transmitted by the first communication node is received, and the channel state information of N ports is determined based on the channel information or channel state information corresponding to the received multiple sets of reference signals.

In an embodiment, acquiring the channel information of the N ports includes receiving first channel information; and determining the predicted channel information corresponding to the N ports according to the first channel information; where the first channel information is channel information of M₁ ports, M₁ and N are each a positive integer, and M₁ < N; or the first channel information is channel information of Mₛ ports, Mₛ is a positive integer, and Mₛ < M₁ < N.

For the content that is not yet exhaustive in this embodiment, reference may be made to the preceding embodiments, which is not repeated here.

In the transmission method provided in the embodiment of the present application, the channel state information of the N ports determined by the second communication node achieves the prediction of the channels of the N ports with a smaller number of ports (that is, the ports corresponding to the K sets of reference signals). The overhead of reference signals is reduced.

Based on the preceding embodiments, variant embodiments of the preceding embodiment are provided. It is to be noted here that for ease of description, only differences from the preceding embodiment are described in the variant embodiments.

In an embodiment, determining the channel state information of N ports includes: receiving the first channel information corresponding to M₁ ports; determining the predicted channel information corresponding to N ports based on the first channel information corresponding to M₁ ports; and determining the channel state information of N ports based on the predicted channel information corresponding to the N ports. M1 and N are positive integers, and M₁ is less than N.

In an embodiment, determining the channel state information of N ports includes receiving the channel information of Mₛ ports; determining the predicted channel information corresponding to N ports based on the channel information of Mₛ ports; and determining the channel state information of N ports based on the predicted channel information corresponding to the N ports. Mₛ and N are positive integers, Mₛ is less than N, and the channel information of Mₛ ports is determined based on the channel information of M₁ ports.

In an embodiment, determining the channel information of the N ports includes receiving the first channel information corresponding to M₁ ports; and determining the predicted channel information corresponding to N ports based on the first channel information corresponding to M₁ ports. M1 and N are positive integers, and M₁ is less than N.

In an embodiment, determining the channel information of the N ports includes receiving the channel information of Mₛ ports; and determining the predicted channel information corresponding to N ports based on the channel information of Mₛ ports; Mₛ and N are positive integers, Mₛ is less than N, and the channel information of Mₛ ports is determined based on the channel information of M₁ ports.

When the second communication node determines the predicted channel information based on the first channel information, the determination may be made based on a target module.

In an embodiment, determining the channel state information of N ports includes receiving the channel state information of M₁ ports; determining the predicted channel information corresponding to the N ports based on the channel state information of M₁ ports; and determining the channel state information of the N ports according to the predicted channel information corresponding to the N ports.

When the second communication node determines the predicted channel information based on the channel state information, the determination may be made based on a target module.

In an embodiment, the K sets of reference signals have the same quasi-co-location configuration.

In an embodiment, the predicted channel information of the N ports is determined by the first communication node.

In an embodiment, the channel state information includes a first type of precoding information or a second type of precoding information.

In an embodiment, the method also includes receiving first indication information, and the first indication information is used to indicate the type of transmitted information.

In an embodiment, the method also includes receiving the first channel information of Mₛ ports, and determining the predicted channel information of N ports based on the first channel information of Mₛ ports, where Mₛ is an integer greater than 1, and M₁ is greater than Mₛ. The first channel information of Mₛ ports is determined based on the first channel information of M₁ ports, such as the channel information of Mₛ ports selected from the first channel information of M₁ ports, and the first channel information of M₁ ports is determined based on the first set of reference signals.

In an embodiment, the method also includes sending topology configuration information of the ports, where the topology configuration information of the ports includes one or more of the following: the value of Mᵢ and the value of N; the number of rows of Mᵢ ports and the number of columns of the Mᵢ ports; the number of rows of the N ports and the number of columns of the N ports; position information of Mᵢ ports among the N ports; or an arrangement manner of the ports; Mᵢ and N are each an integer greater than 1, and i is greater than or equal to 1 and less than or equal to K.

In an embodiment, the position information of the Mᵢ ports among the N ports includes one of the following: The Mᵢ ports correspond to ports in one polarization direction among the N ports; the Mᵢ ports correspond to odd-indexed ports among the N ports; the Mᵢ ports correspond to even-indexed ports among the N ports; a row of the Mᵢ ports corresponds to odd-indexed ports or even-indexed ports in a row of the N ports; a column of the Mᵢ ports corresponds to odd-indexed ports or even-indexed ports in a column of the N ports; the Mᵢ ports correspond to odd-row ports or even-row ports among the N ports; or the Mᵢ ports correspond to odd-column ports or even-column ports among the N ports. Mᵢ and N are each an integer greater than 1, and i is greater than or equal to 1 and less than or equal to K.

In an embodiment, transmitting the K sets of reference signals includes periodically sending the K sets of reference signals, where the K sets of reference signals have the same number of ports.

In an embodiment, periodically sending the K sets of reference signals includes sending K sets of reference signals of W₁₁ ports in odd periods; and sending K sets of reference signals of W₁₂ ports in even periods, where K is a positive integer, and W₁₁ and W₁₂ are different positive integers.

In an embodiment, periodically sending the K sets of reference signals includes sending K sets of reference signals of Q₁ ports for X consecutive periods, and then sending K sets of reference signals of Q₂ ports for Y consecutive periods, where X, Y, and K are each a positive integer, and Q₁ and Q₂ are different positive integers.

In an embodiment, transmitting the K sets of reference signals includes semi-persistently sending the K sets of reference signals, where the K sets of reference signals have the same number of ports, and K is a positive integer.

In an embodiment, semi-persistently sending the K sets of reference signals includes sending K sets of reference signals of M₃₁ ports in odd periods; sending K sets of reference signals of M₃₂ ports in even periods; and during the semi-persistent period with a duration of C, sending K sets of reference signals for the first target number of ports in the C-th period. M₃₁ and M₃₂ are positive integers.

In an embodiment, the first target number is determined based on the parity of C, the size of M₃₁, and the size of M₃₂.

In an embodiment, when C is an odd number, K sets of reference signals for M₃₁ ports are sent in the C-th period, or K sets of reference signals for M₃₂ ports are sent; when C is an even number, K sets of reference signals for M₃₁ ports are sent in the C-th period, or K sets of reference signals for M₃₂ ports are sent; the first target number is the larger number of M₃₁ and M₃₂.

In an embodiment, semi-persistently sending the K sets of reference signals includes sending K sets of reference signals of W₁ ports for S consecutive periods, and then sending K sets of reference signals of W₂ ports for L consecutive periods; and during the semi-persistent period with a duration of C, sending the second target number of K sets of reference signals in the C-th period. S, L, and K are each a positive integer, and W₁ and W₂ are different positive integers.

In an embodiment, the second target number is determined based on whether C is an integer multiple of the sum of S and L, the size of W₁, and the size of W₂.

In an embodiment, in the case where C is an integer multiple of the sum of S and L, K sets of reference signals of W₁ or W₂ ports are sent in the C-th period; in the case where C is not an integer multiple of the sum of S and L, K sets of reference signals of W₁ or W₂ ports are sent in the C-th period; the second target number is the larger number of W₁ and W₂.

In an embodiment, in the case where C is an integer multiple of (S + L), the K sets of reference signals of the W₂ ports are transmitted in a C-th period; and in the case where C is not an integer multiple of (S + L), the K sets of reference signals of W₁ or W₂ ports are transmitted in the C-th period according to a preset rule.

In an embodiment, the method also includes receiving the channel state information of M₁ ports.

In an embodiment, the method also includes receiving second indication information, where the second indication information is used to indicate the type of channel state information.

An exemplary description of the present application is made below.

In this example, the transmission method provided by the present application may be considered a CSI prediction method. To reduce the overhead of reference signals, it is beneficial to study the reduction of CSI-RS overhead using artificial intelligence (AI) and machine learning (ML). Specifically, the channel of N ports is predicted using a smaller number of M ports, where M < N, and M and N are positive integers.

When the channel of N ports are predicted using M ports, it is necessary to determine how to configure the reference signals of the M ports, such as configuring a CSI-RS, how to predict and feedback the channel information of the N ports from the reference signals of the M ports, and how to configure the topology of the antennas, such as determining whether to use a linear array, planar array, dual-polarized array, or circular array with a certain number of rows and columns. Additionally, it is necessary to determine which ports are actually transmitted, how many ports are recovered, how to restore from multiple sets of ports to a larger set of ports, and how to configure periodic and aperiodic ports to verify the performance of channel recovery.

To address one of the preceding technical problems, some embodiments or examples are provided below.

In solution 1, K sets of CSI-RS resources are received, and the predicted channel information H for N ports is acquired based on the K sets of CSI resources. N > M₁ + ... + M_{K}, N, M₁, ..., M_{K} are positive integers, and Mₖ is the number of ports corresponding to the k-th CSI-RS resource.

In an embodiment, the K sets of CSI-RS resources have the same quasi-co-location (QCL) configuration.

In an embodiment, the K sets of CSI-RS resources have the same number of ports.

Example 1: A terminal receives K sets of CSI-RS resources configured by a base station, and the terminal acquires the i-th channel information Hᵢ of Mᵢ ports according to the i-th set of CSI-RS resources and acquires the predicted channel information H of N ports according to the channel information Hᵢ (i = 1, ..., K) of Mᵢ ports acquired from the K sets of CSI-RS resources.

Determining the predicted channel information of N ports according to the K sets of reference signals includes the following:

Determining the predicted channel information of N ports according to (K = 2) sets of reference signals includes determining the first channel information of M₁ ports according to a first set of reference signals; determining the second channel information of M₂ ports according to a second set of reference signals; and determining the predicted channel information of the N ports according to the first channel information and the second channel information.

N > M₁ + M₂. One manner is to input the first channel information H₁ and the second channel information H₂ into a target module, and the predicted channel information H of N ports is acquired through the target module. On each RE, H₁ is a complex matrix of Nr*M₁, H₂ is a complex matrix of Nr*M₂, and H is a complex matrix of Nr*N.

Example 2: The terminal receives K CSI-RS resources configured by the base station, determines the i-th channel information Hᵢ of Mᵢ ports based on the i-th set of reference signals, acquires the predicted channel information Pᵢ of Nᵢ ports based on the channel information Hᵢ of Mᵢ ports (for example, inputting Hᵢ into the target module to acquire the predicted channel information Pᵢ), and combines the predicted channel information Pᵢ of all K sets of reference signals into a larger predicted channel matrix H, where i=1, ..., K.

For example, determining the predicted channel information of N ports according to (K = 2) sets of reference signals includes determining the first channel information of M₁ ports according to a first set of reference signals; determining the second channel information of M₂ ports according to a second set of reference signals; determining the first predicted channel information of N₁ ports according to the first channel information; determining the second predicted channel information of N₂ ports according to the second channel information; and combining the first predicted channel information and the second predicted channel information to obtain the predicted channel information of the N ports, where N₁ and N₂ are each a positive integer, N₁ + N₂ = N, and M₁ and M₂ satisfy at least one of the following conditions: M₁ < N₁ or M₂ < N₂.

One manner is to input Hᵢ into the target module and acquire the predicted channel information Pᵢ of Nᵢ ports through the target module. On each RE, Pᵢ is a complex matrix of Nr*Ni, Hᵢ is a complex matrix of Nr*Mᵢ, Pᵢ is combined (such as splicing) into a larger channel matrix H, and H is a complex matrix of Nr*N, where i = 1, 2.

Example 3: Determining the predicted channel information of N ports according to (K = 1) set of reference signals includes determining the first channel information of M₁ ports according to the reference signals; and determining the predicted channel information of the N ports according to the first channel information, where K = 1, M₁ and N are each a positive integer, and M₁ < N.

When K = 1, the terminal receives 1 CSI-RS resource configured by the base station, acquires the first channel information H₁ of M₁ ports according to the CSI-RS resource, and acquires the predicted channel information H of N ports according to the first channel information H₁ of M₁ ports. N > M₁. One manner is to input Hᵢ into the target module and acquire the predicted channel information H of N ports through the target module. On each RE, H₁ is a complex matrix of Nr*M₁, and H is a complex matrix of Nr*N.

Example 4: The terminal feeds back the channel state information corresponding to the predicted channel information H to the base station, such as transmitting the channel state information of the N ports after determining the channel state information of the N ports according to the predicted channel information of the N ports. The channel state information may include the first type of precoding information or the second type of precoding information which match the predicted channel information H.

Example 5: Determining, by the first communication node, the predicted channel information of the N ports according to the K sets of reference signals includes determining the first channel information of M₁ ports according to a first set of reference signals, and transmitting the first channel information of the M₁ ports; where the first channel information of the M₁ ports is configured to determine the predicted channel information of the N ports. M1 and N are each an integer greater than 1, M1 is less than N, and K = 1. Determining, by the second communication node, the channel state information of N ports includes receiving the first channel information corresponding to M₁ ports; determining the predicted channel information corresponding to N ports based on the first channel information corresponding to M₁ ports; and determining the channel state information of N ports based on the predicted channel information corresponding to the N ports.

The terminal feeds back the first channel information H₁ of M₁ ports to the base station, and the base station inputs the target module according to the first channel information H₁ of M₁ ports to acquire the predicted channel information H of N ports. The terminal needs to inform the base station whether the feedback is channel information or channel state information. If the first indication information is transmitted, the first indication information is used to indicate the type of transmitted information. The type of transmitted information includes channel information or channel state information.

In an embodiment, to acquire the predicted channel information H of N ports from the first channel information H₁ of M₁ ports, the terminal needs to receive the topology configuration of the antennas of the base station, that is, to acquire the topology configuration information of the ports. The topology configuration information includes the following:
(A) the value of Mᵢ and the value of N;
(B) the number of rows and columns of the antennas corresponding to Mᵢ ports, that is, the number of rows of Mᵢ ports and the number of columns of the Mᵢ ports;
(C) the number of rows and columns of the antennas corresponding to N ports, that is, the number of rows of the N ports and the number of columns of the N ports;
(D) the index of the Mᵢ ports among the N ports, that is, the position information of Mᵢ ports among the N ports; and
(E) the arrangement manner of the ports, that is, the arrangement of the antennas, including a linear array, a planar array, a dual-polarized array, and a circular array.

For the index of Mᵢ ports in N ports, that is, the position information, the following default manners are included:
(A) The Mi ports correspond to ports in one polarization direction among the N ports;
(B) The Mi ports correspond to odd-indexed ports among the N ports;
(C) The Mi ports correspond to even-indexed ports among the N ports;
(D) A row of the Mi ports corresponds to odd-indexed ports or even-indexed ports in a row of the N ports;
(E) A column of the Mi ports corresponds to odd-indexed ports or even-indexed ports in a column of the N ports;
(F) The Mi ports correspond to odd-row ports or even-row ports among the N ports;
(G) The Mi ports correspond to odd-column ports or even-column ports among the N ports.

In an embodiment, the terminal acquires the first channel information H₁ of the M₁ ports by receiving CSI-RS resources with periodic time-domain characteristics.

One manner is that the number of ports of the CSI-RS resources in each period may be different. For example, the following are included:
(A) CSI-RSs of M11 ports are received in odd periods, and CSI-RSs of M12 ports are received in even periods. M11 and M12 are different positive integers.
(B) CSI-RSs of M21 ports are received for X consecutive periods, and CSI-RSs of M22 ports are received for Y consecutive periods. M21 and M22 are different positive integers. X and Y are positive integers. For example, CSI-RSs of M21 ports are received for 4 consecutive periods, and then CSI-RSs of M22 ports are received for 1 period. X and Y need to be configured. That is, periodically receiving the K sets of reference signals includes receiving K sets of reference signals of Q1 ports for X consecutive periods, and then receiving K sets of reference signals of Q2 ports for Y consecutive periods, where X, Y, and K are each a positive integer, and Q1 and Q2 are different positive integers. M11, M12, M21, M22, M31, M32, Mk, Q1, and Q2 are only used to distinguish the number of ports.

In an embodiment, the terminal acquires the first channel information H₁ of the M₁ ports by receiving CSI-RS resources with semi-persistent time-domain characteristics.

One manner is that the number of ports of the CSI-RS resources in each period may be different. For example, the following are included:
(A) CSI-RSs of M₃₁ ports are received in odd periods (that is, K sets of reference signals of M₃₁ ports are received in odd periods), and CSI-RSs of M₃₂ ports are received in even periods (that is, K sets of reference signals of M₃₂ ports are received in even periods). M₃₁ and M₃₂ are different positive integers. For the semi-persistent period with a duration of C, if C is an odd number, the CSI-RSs for M₃₂ ports are forcibly transmitted in the C-th period. Alternatively, if C is an even number, the CSI-RSs for M₃₁ ports are forcibly transmitted in the C-th period.

During the semi-persistent period with a duration of C, K sets of reference signals for the first target number of ports are transmitted in the C-th period.

In an embodiment, the first target number is determined based on the parity of C, the size of M₃₁, and the size of M₃₂.

In an embodiment, in the case where C is an odd number, K sets of reference signals of M₃₁ ports are transmitted in the C-th period, or K sets of reference signals of M₃₂ ports are transmitted; in the case where C is an even number, K sets of reference signals of M₃₁ ports are transmitted in the C-th period, or K sets of reference signals of M₃₂ ports are transmitted.

The first target number is the larger number of M₃₁ and M₃₂.

The CSI-RSs of W₁ ports are received for S consecutive periods, and then the CSI-RSs of W₂ ports are received for L consecutive periods. W₁ and W₂ are different positive integers. S and L are positive integers. For example, the CSI-RSs of W₁ ports are received for 4 consecutive periods, and then the CSI-RSs of W₂ ports are received for 1 period. S and L need to be configured. For the semi-persistent period with a duration of C, C is an integer multiple of (S + L) or C is not an integer multiple of (S + L).

In the case where C is an integer multiple of (S + L), K sets of reference signals of W₂ ports are transmitted in the C-th period.

In the case where C is not an integer multiple of (S + L), K sets of reference signals of W₁ or W₂ ports are transmitted in the C-th period according to a preset rule.

The terminal receives K sets of CSI-RSs, acquires the first channel information H₁ of M₁ ports according to the K sets of CSI-RSs, inputs the first channel information H₁ into the target module to output the predicted channel information H of N ports, and feeds back the channel state information CSI corresponding to the predicted channel information H.

In an embodiment, the terminal may not be able to output the predicted channel information of N ports due to capability problems or changes in the scene, or the output predicted channel information of N ports may cause the estimated predicted channel information H to differ greatly from the actual channel. In this case, the terminal may need to fall back to the traditional channel estimation method, such as the non-AI channel prediction method and the linear interpolation method to estimate the channel.
(A) The terminal estimates the first channel information H1 of M1 ports and feeds back the first channel information H1. The base station is instructed to restore the predicted channel information H according to the first channel information H1. For example, if the second indication information indicates to the second communication node that the first communication node transmits the first channel information H1, the second communication node needs to determine the predicted channel information corresponding to N ports according to the channel state information corresponding to the first channel information H1.
(B) The terminal estimates the first channel information H1 of M1 ports and feeds back the channel state information corresponding to the first channel information H1. The terminal indicates to the base station that the terminal uses the traditional channel estimation method, that is, no channel spatial domain prediction is performed. If the second indication information indicates that the first communication node transmits channel state information, the predicted channel information corresponding to the N ports is not determined.
(C) The terminal estimates the first channel information of Mₛ ports and feeds back the first channel information of the Mₛ ports or the channel state information corresponding to the first channel information of the Mₛ ports, where Mₛ < M₁. For example, the terminal selects the channels of the Mₛ ports from the channels of the M₁ ports through the AI algorithm for feedback. That is, determining the predicted channel information of N ports according to (K = 1) set of reference signals includes determining the first channel information of M₁ ports according to a first set of reference signals; determining the first channel information of Mₛ ports according to the first channel information of M₁ ports; and transmitting the first channel information of Mₛ ports, where the first channel information of Mₛ ports is used to determine the predicted channel information of N ports, M₁ and Mₛ are integers greater than 1, the M₁ is greater than Mₛ, and K = 1. For example, the second indication information indicates the following to the second communication node: The first communication node transmits the channel information selected by the ports; or the first communication node transmits the channel state information corresponding to the channel information selected by the ports.

The preceding example embodiments are described below.

In some examples, the base station sends a set of reference signals of M ports in a slot. When receiving the reference signals of the M ports, the terminal acquires the predicted channel information H of the corresponding slot according to the received reference signals of the M ports. In some examples, H is a complex matrix, which is related to the number of transmitting antennas M, the number of receiving antennas Nr, and the number of physical resource blocks (PRBs) Nb. For example, H is a complex matrix of Nr*M*Nb, a complex matrix of Nr*M is present on each PRB, or a complex matrix of Nr*M is present on each RE, where Nr, M, and Nb are positive integers.

In some examples, the reference signal is a CSI-RS including M ports.

In some examples, the reference signal is a DMRS including M ports.

In some examples, the reference signal is a PRS including M ports.

In some examples, to reduce the overhead of the reference signals, it is necessary to use the channel of M ports to predict the channel of N ports. The base station sends reference signals of M ports in a slot. The terminal receives the reference signals of the M ports. The first channel information H1 of the corresponding slot is acquired according to the received reference signals of the M ports. H1 is a complex matrix including M transmitting ports. In some examples, H1 is a complex matrix, which is related to the number of transmitting antennas M, the number of receiving antennas Nr, and the number of physical resource blocks (PRBs) Nb. For example, H is a complex matrix of Nr*M*Nb, a complex matrix of Nr*M is present on each PRB, or a complex matrix of Nr*M is present on each RE. The terminal encodes the first channel information H1 and inputs H1 into the target module. The target module, such as the first AI module, outputs the predicted channel information H with the number of transmitting ports N. In some examples, H is a complex matrix, which is related to the predicted number of transmitting antennas N, the number of receiving antennas Nr, and the number of physical resource blocks Nb. For example, H is a complex matrix of Nr*N*Nb, a complex matrix of Nr*N is present on each PRB, or a complex matrix of Nr*N is present on each RE, where Nr, N, M, Nb are positive integers, M < N, Nr is the number of receiving antennas, M and N are the number of ports of the transmitted reference signals and the number of ports corresponding to the predicted reference signals, respectively, and Nb is the number of PRBs or the number of REs.

The first AI module may be considered as an AI module for determining the predicted channel information H with the number of transmitting ports N, where "first" is only used to distinguish different AI modules.

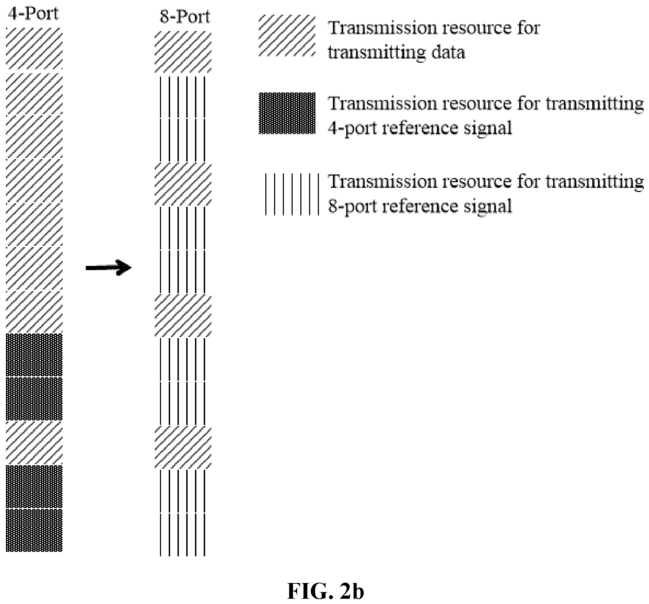

FIG. 2b is a diagram of a predicted channel according to an embodiment of the present application. To acquire the channel corresponding to the 8-port CSI-RS, the base station configures the actual transmission of the 4-port CSI-RS based on the AI/ML technology, The CSI-RS may be transmitted to the UE. Then, the UE measures the 4-port CSI-RS to obtain the 4-port channel and restores the 4-port channel to the 8-port channel through AI/ML.

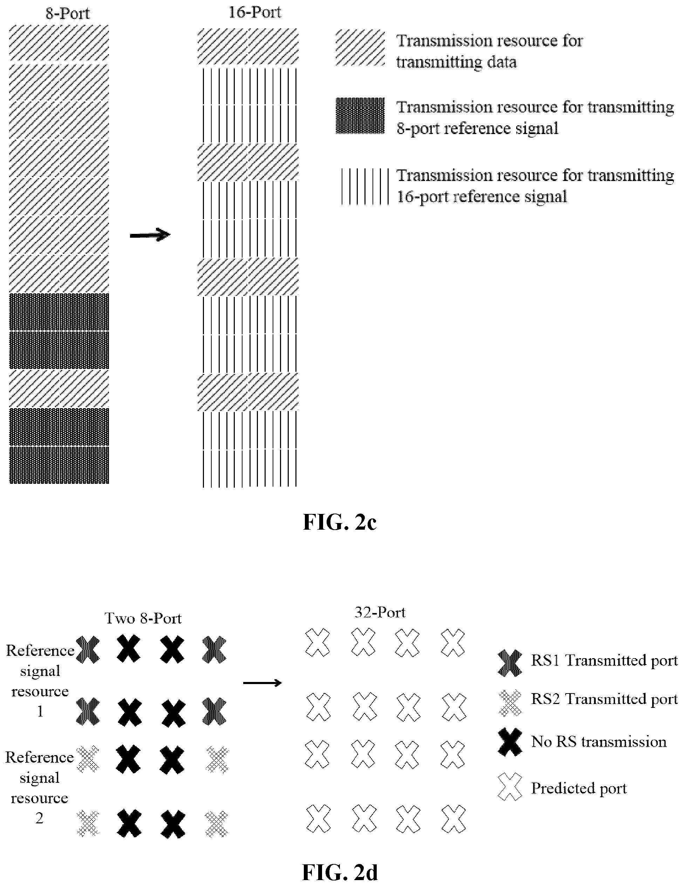

FIG. 2c is a diagram of another predicted channel according to an embodiment of the present application. As shown in FIG. 2c, to obtain the channel corresponding to the 16-port CSI-RS, the base station configures the actual transmission of the 8-port CSI-RS based on the AI/ML technology. The CSI-RS may be transmitted to the UE. Then, the UE measures the 8-port CSI-RS to obtain the 8-port channel and restores the 8-port channel to the 16-port channel through AI/ML.

In some examples, a channel matrix H with N transmitting ports is acquired according to a channel matrix H1 with M₁ transmitting ports.

In an example, an Nr*M complex matrix of each PRB (or RE) is used as an input of a target module, then an Nr*N channel matrix with N transmitting ports corresponding to each PRB (or RE) is output, and then the Nr*N channel matrix of each PRB (or RE) is merged into a final predicted channel matrix H.

In an example, a complex matrix of 1*M corresponding to each receiving antenna of each PRB (or RE) is used as an input of a target module, then a 1*N channel matrix with N transmitting ports corresponding to each receiving antenna of each PRB (or RE) is output, and then the 1 *N channel matrix of each receiving antenna of each PRB (or RE) is merged into a final predicted channel matrix H.

In an example, the Nr*M*Nb complex matrix of all PRBs (or REs) is used as the input of the target module, and then the Nr*N*Nb channel matrix with N transmitting ports corresponding to all PRBs (or REs) is output, where Nr, N, M, and Nb are positive integers, M < N, Nr is the number of receiving antennas, M and N are the number of ports of the transmitted reference signals and the number of ports corresponding to the predicted reference signals, respectively, and Nb is the number of PRBs or the number of REs.

In some examples, channel state information is acquired according to the predicted channel information H predicted in the spatial domain, such as quantizing the predicted channel information H into the first type of precoding information or the second type of precoding information. The channel state information (CSI) corresponding to the predicted channel information H is fed back. For example, the CSI is fed back in the uplink control information (UCI). In some examples, the UCI is carried on at least one non-periodic PUSCH. In some examples, the CSI corresponding to the M pieces of channel information is carried on at least one semi-persistent PUSCH.

In some embodiments, the base station configures K sets of CSI-RS resources and transmits the K sets of CSI-RS resources in at least one slot. The k-th set of CSI-RS resources is the reference signals of Mₖ ports, where Mₖ is a positive integer, and k = 1, ..., K. The terminal receives the K sets of CSI-RS resources in at least one slot and according to the k-th set of CSI-RS resources, acquires a channel matrix Hₖ with Mₖ transmitting ports. Hₖ is a matrix related to the number of PRBs (or REs), the number of transmitting ports, and the number of receiving ports. According to the Hₖ, where k = 1, ..., K, a channel matrix H with N transmitting ports is predicted, where N > M₁ + ... + M_{K}, and N, M₁, ..., M_{K} are positive integers.

In an example, the K sets of CSI-RS resources have the same QCL configuration.

In an example, the K sets of CSI-RS resources have the same number of ports.

In an example, when K = 2, the base station configures K sets of CSI-RS resources and transmits the 2 sets of CSI-RS resources in at least one slot. The k-th set of CSI-RS resources is reference signals of Mₖ ports, where Mₖ is a positive integer, and k = 1, 2. The terminal receives two sets of CSI-RS resources configured by the base station. The terminal acquires the first channel information H1 of M₁ transmitting ports according to a first set of CSI-RS resources, acquires the second channel information H₂ of M₂ transmitting ports according to a second set of CSI-RS resources, and acquires the predicted channel information H of N ports according to the first channel information H₁ of the M₁ ports and the second channel information H₂ of the M₂ ports. N > M₁ + M₂. One manner is to input H₁ and H₂ into the target module and acquire the predicted channel information H of N ports through the target module. On each RE, H₁ is a complex matrix of Nr*M₁, H₂ is a complex matrix of Nr*M₂, and H is a complex matrix of Nr*N.

FIG. 2d is a diagram illustrating the determination of predicted channel information according to an embodiment of the present application. As shown in FIG. 2d, M₁ = M₂ = 8, and N = 32.

In an example, when K = 2, the base station configures K sets of CSI-RS resources and transmits the 2 sets of CSI-RS resources in at least one slot. The k-th set of CSI-RS resources is reference signals of Mₖ ports, where Mₖ is a positive integer, and k = 1, 2. The terminal receives 2 sets of CSI-RS resources configured by the base station, acquires the channel information Hᵢ of Mᵢ transmitting ports according to the i-th set of CSI-RS resources, and acquires the predicted channel information H of N ports according to the channel information Hᵢ of Mᵢ transmitting ports. One manner is to input Hᵢ into the target module and acquire the predicted channel information Pᵢ of Nᵢ transmitting ports through the spatial prediction function of the target module, where on each RE, the predicted channel information Pᵢ is a complex matrix of Nr*Nᵢ, Hᵢ is a complex matrix of Nr*Mᵢ, i= 1, 2, P₁ and P₂ are combined into a larger channel matrix H in the dimension of transmitting antennas, H is a complex matrix of Nr*N, and optionally, N = M₁ + M₂.

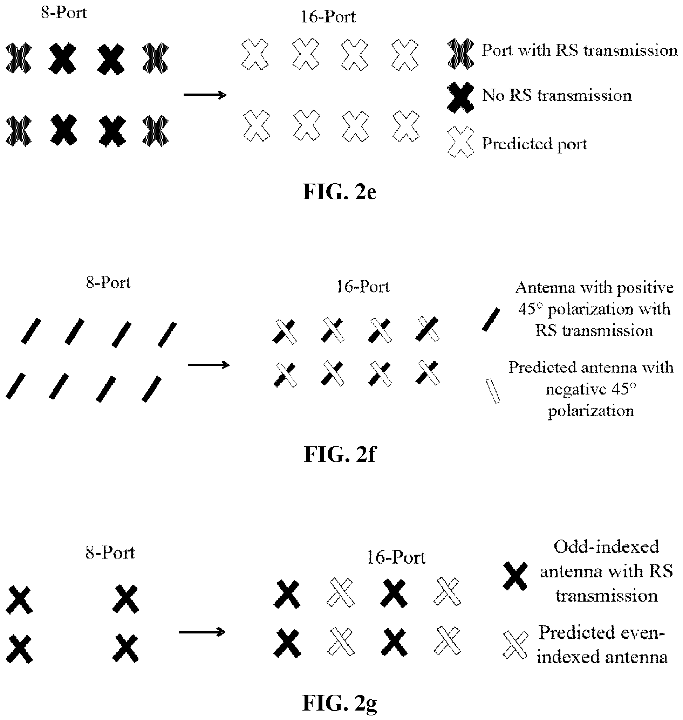

In an example, K = 1, and the base station configures 1 set of CSI-RS resources and transmits the CSI-RS resources in one slot. The CSI-RS resources are reference signals of M₁ ports, and M₁ is a positive integer. The terminal receives 1 CSI-RS resource configured by the base station, acquires the first channel information H₁ of M₁ ports according to the CSI-RS resource, and acquires the predicted channel information H of N ports according to the first channel information H₁ of M1 ports. N > M₁. One manner is to input Hᵢ into the target module and acquire the predicted channel information H of N ports through the target module. On each RE, H₁ is a complex matrix of Nr*M₁, and H is a complex matrix of Nr*N. FIG. 2e is a diagram illustrating another determination of predicted channel information according to an embodiment of the present application. As shown in FIG. 2e, the first channel information H₁ of the (M₁ = 8) ports is used to predict the predicted channel information H of (N = 16).

In some embodiments, to better predict the predicted channel information H of N ports from the first channel information H₁ of M ports, the base station configures the values of the number of actually transmitted ports M and the predicted number of ports N as needed and indicates M and N to the terminal through signaling. The terminal acquires the number of actually transmitted ports M and the predicted number of ports N by receiving the indication of the base station.

In some examples, the base station and the terminal agree on the values of the number of actually transmitted ports M and the predicted number of ports N. In some examples, the base station and the terminal determine the number of actually transmitted ports M according to the input of the target module.

In some examples, the base station and the terminal determine the value of the predicted number of ports N according to the output of the target module.

In some examples, the base station configures multiple sets of values of the number of actually transmitted ports M and the predicted number of ports N and transmits the multiple sets of configuration values of M and N to the terminal through higher-layer signaling. The terminal receives the multiple sets of configuration values of M and N and selects one set of values of M and N according to the implementation of the channel or the spatial prediction capability of the terminal itself.

In some embodiments, to better acquire the predicted channel information H of N ports from the first channel information H₁ of M ports, many types of antenna arrangements exist, such as linear arrays, planar arrays, dual-polarized arrays, and circular arrays, and the spacing between antennas may be either uniform or non-uniform. C (M, N) possibilities are also present for selecting M antennas from N antennas to transmit reference signals. Therefore, in some examples, the base station needs to indicate to the terminal, through signaling, the row and column arrangement of the antennas corresponding to the M ports. In some examples, the base station needs to indicate to the terminal, through signaling, the row and column arrangement of the antennas corresponding to the N predicted ports. In some examples, the base station needs to indicate to the terminal, through signaling, the index or position of the antennas corresponding to the M ports among the N ports.

In some examples, FIG. 2f is a diagram of a port correspondence relationship according to an embodiment of the present application. As shown in FIG. 2f, Mᵢ ports correspond to antennas of the same polarization direction among N ports.

In some examples, Mᵢ ports correspond to odd-indexed ports among the N ports. In some examples, Mᵢ ports correspond to even-indexed ports among the N ports. FIG. 2g is a diagram of another port correspondence relationship according to an embodiment of the present application. As shown in FIG. 2g, the odd-indexed port channels are used to predict the even-indexed port channels.

In some examples, a row of Mᵢ ports corresponds to odd ports or even ports in a row of the N ports.

In some examples, a column of Mᵢ ports corresponds to odd ports or even ports in a column of the N ports.

In some examples, Mᵢ ports correspond to odd-row ports or even-row ports among the N ports.

In some examples, Mᵢ ports correspond to odd-column ports or even-column ports among the N ports.

In some examples, the base station sends a periodic reference signal. For example, the base station configures the resource type of the periodic reference signal (such as a CSI-RS, a PRS, and an SSB), the time-frequency resource mapping (resourceMapping) of the reference signal, the number of ports for the reference signal, the number of ports that the reference signal needs to predict, the scrambling code ID, and the period and offset of the reference signal. The terminal acquires the first channel information H1 of the M₁ ports by receiving the periodic reference signal sent by the base station.

In an example, the periodic reference signal starts to be transmitted at the n-th slot and is transmitted every T slots, that is, the periodic reference signal is transmitted at the slot of (n + o*T), where o is an integer greater than or equal to 0. In an example, the reference signals transmitted at every alternate period have the same number of ports. In an example, the reference signals transmitted at every alternate period have different numbers of ports. For example, when o is an odd number, a reference signal with a port number of M₁₁ is transmitted, and when o is an even number, a reference signal with a port number of M₁₂ is transmitted. M₁₁ and M₁₂ are different positive integers.

In an example, the reference signal transmitted at every alternate period has different numbers of ports. For example, the reference signal of M₂₁ ports is transmitted for X consecutive periods, and then the reference signal of M₂₂ ports is received for Y consecutive periods. M₂₁ and M₂₂ are different positive integers. X and Y are positive integers. For example, the reference signal of M₂₁ ports is transmitted for 4 consecutive periods, and then the reference signal of M₂₂ ports is transmitted for 1 period. X and Y need to be configured.

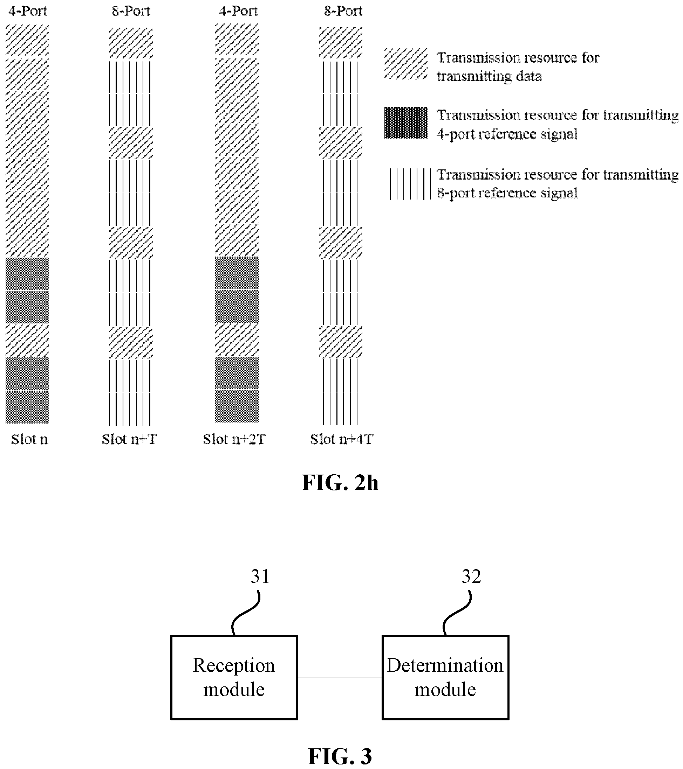

In an example, the SP reference signal starts to be transmitted at the n-th slot and is transmitted every T slots, that is, the SP reference signal is transmitted in the slot of (n + o*T), where o is an integer greater than or equal to 0 and less than or equal to C. In an example, within the C periods of continuous transmission of the reference signal, the reference signal transmitted in each period has the same number of ports. In an example, within the C periods of continuous transmission of the reference signal, the reference signal transmitted at every period has different numbers of ports. For example, when o is an odd number, a reference signal with a port number of M₃₁ is transmitted, and when o is an even number, a reference signal with a port number of M₃₂ is transmitted. In an example, it is specified that in the last period, that is, when k = C, a reference signal with a port number of M₃₂ is transmitted fixedly. In an example, it is specified that in the last period, that is, when k = C, a reference signal with a port number of M₃₁ is transmitted fixedly. M₃₁ and M₃₂ are different positive integers. FIG. 2h is a diagram of a reference signal transmission according to an embodiment of the present application. With reference to FIG. 2h, C is equal to 4. When k is equal to 4, the reference signal of M₃₁ is transmitted, M₃₁ is equal to 8, and M₃₂ is equal to 4.

In an example, within the C periods of continuous transmission of the reference signal, the reference signal transmitted at every period has different numbers of ports. For example, the reference signal of W₁ ports is transmitted for S consecutive periods, and then the reference signal of W₂ ports is received for L consecutive periods. W₁ and M₁₂ are different positive integers. S and L are positive integers. For example, the reference signal of W₁ ports is transmitted for 4 consecutive periods, and then the reference signal of W₂ ports is transmitted for 1 period. S and L need to be configured. In an example, it is specified that in the last period, that is, when k = C, a reference signal with a port number of W₂ is transmitted fixedly. In an example, it is specified that in the last period, that is, when k = C, a reference signal with a port number of W₁ is transmitted fixedly.

In some embodiments, the terminal receives the CSI-RSs of M ports, acquires the first channel information H₁ of M₁ ports according to the CSI-RSs of M ports, inputs the first channel information H₁ into the target module to output the predicted channel information H of N ports, and feeds back the CSI corresponding to the predicted channel information H.

In an exemplary embodiment, the embodiment of the present application provides a transmission apparatus. FIG. 3 is a diagram illustrating the structure of a transmission apparatus according to an embodiment of the present application. As shown in FIG. 3, the transmission apparatus may be integrated into the first communication node and includes a reception module 31 and a determination module 32.

The reception module 31 is configured to receive K sets of reference signals.

The determination module 32 is configured to determine predicted channel information of N ports according to the K sets of reference signals, where N > M₁ + M₂ + ... + M_{K}, N, M₁, M₂, ..., M_{K} are each a positive integer, and Mₖ denotes the number of ports corresponding to the k-th set of reference signals; k = 1, ..., K, and K is a positive integer.

The transmission apparatus provided in this embodiment is configured to perform the transmission method of the embodiment shown in FIG. 1. The transmission apparatus provided in this embodiment has implementation principles and technical effects similar to the transmission method of the embodiment shown in FIG. 1, which are not repeated here.

Based on the preceding embodiments, variant embodiments of the preceding embodiment are provided. It is to be noted here that for ease of description, only differences from the preceding embodiment are described in the variant embodiments.

In an embodiment, the K sets of reference signals have the same quasi-co-location configuration.

In an embodiment, determining, by the determination module 32, the predicted channel information of the N ports according to the K sets of reference signals includes determining the i-th channel information Hᵢ of Mᵢ ports according to the i-th set of reference signals, where i = 1, ..., K; and determining the predicted channel information of the N ports according to the i-th channel information Hᵢ (that is, determining the predicted channel information of the N ports according to H₁, ..., H_{K}). Mᵢ is a positive integer, i = 1, ..., K, and K is a positive integer.

In an embodiment, determining, by the determination module 32, the predicted channel information of the N ports according to the K sets of reference signals includes determining i-th channel information Hᵢ of Mᵢ ports according to the i-th set of reference signals; determining the i-th predicted channel information Pᵢ of Nᵢ ports according to the i-th channel information Hᵢ, where i = 1, ..., K; and combining the i-th predicted channel information Pᵢ to obtain the predicted channel information of the N ports (that is, obtaining the predicted channel information of N ports by combining P₁, ..., P_{K}). Nᵢ and Mᵢ are each a positive integer, Nᵢ is not less than Mᵢ, i = 1, ..., K, and K is a positive integer.

In an embodiment, determining, by the determination module 32, the predicted channel information of the N ports according to the K sets of reference signals includes determining the first channel information of M₁ ports according to a first set of reference signals; determining the second channel information of M₂ ports according to a second set of reference signals; determining the predicted channel information of the N ports according to the first channel information and the second channel information.

In an embodiment, determining, by the determination module 32, the predicted channel information of the N ports according to the K sets of reference signals includes determining the first channel information of M₁ ports according to a first set of reference signals; determining the second channel information of M₂ ports according to a second set of reference signals; determining the first predicted channel information of N₁ ports according to the first channel information; determining the second predicted channel information of N₂ ports according to the second channel information; and combining the first predicted channel information and the second predicted channel information to obtain the predicted channel information of the N ports, where N₁ and N₂ are each a positive integer, N₁ + N₂ = N, and M₁ and M₂ satisfy at least one of the following conditions: M₁ < N₁ or M₂ < N₂.

In an embodiment, determining, by the determination module 32, the predicted channel information of the N ports according to the K sets of reference signals includes determining the first channel information of M₁ ports according to the reference signals; and determining the predicted channel information of the N ports according to the first channel information, where K = 1, M₁ and N are each a positive integer, and M₁ < N.

In an embodiment, this apparatus also includes a first transmission module configured to perform the following: determining channel state information of the N ports according to the predicted channel information of the N ports; and transmitting the channel state information of the N ports.

In an embodiment, the channel state information includes a first type of precoding information or a second type of precoding information.

In an embodiment, determining, by the determination module 32, the predicted channel information of the N ports according to the K sets of reference signals includes determining the first channel information of M₁ ports according to a first set of reference signals, and transmitting the first channel information of the M₁ ports; where the first channel information of the M₁ ports is configured to determine the predicted channel information of the N ports. M1 and N are each an integer greater than 1, M1 is less than N, and K = 1.

In an embodiment, the apparatus also includes a second transmission module configured to transmit first indication information, where the first indication information is used to indicate the type of transmitted information.

In an embodiment, determining, by the determination module 32, the predicted channel information of the N ports according to the K sets of reference signals includes determining the first channel information of M₁ ports according to a first set of reference signals; determining the first channel information of Mₛ ports according to the first channel information of the M₁ ports; and transmitting the first channel information of the Mₛ ports, where the first channel information of the Mₛ ports is configured to determine the predicted channel information of the N ports, M₁ and Mₛ are each an integer greater than 1, M₁ is greater than Mₛ, and K = 1.

In an embodiment, this apparatus also includes an acquisition module configured to perform the following: acquiring topology configuration information of the ports. The topology configuration information of the ports includes at least one of the following: the value of Mᵢ and the value of N; the number of rows of Mᵢ ports and the number of columns of the Mᵢ ports; the number of rows of the N ports and the number of columns of the N ports; position information of Mᵢ ports among the N ports; or the arrangement manner of the ports. Mᵢ and N are each an integer greater than 1, and i is greater than or equal to 1 and less than or equal to K.

In an embodiment, the position information of the Mᵢ ports among the N ports includes one of the following: The Mᵢ ports correspond to ports in one polarization direction among the N ports; the Mᵢ ports correspond to odd-indexed ports among the N ports; the Mᵢ ports correspond to even-indexed ports among the N ports; a row of the Mᵢ ports corresponds to odd-indexed ports or even-indexed ports in a row of the N ports; a column of the Mᵢ ports corresponds to odd-indexed ports or even-indexed ports in a column of the N ports; the Mᵢ ports correspond to odd-row ports or even-row ports among the N ports; or the Mᵢ ports correspond to odd-column ports or even-column ports among the N ports. Mᵢ and N are each an integer greater than 1, and i is greater than or equal to 1 and less than or equal to K.

In an embodiment, the reception module 31 is configured to periodically receive the K sets of reference signals, where the K sets of reference signals have the same number of ports.

In an embodiment, the reception module 31 is configured to receive K sets of reference signals of Q₁ ports for X consecutive periods and then receive K sets of reference signals of Q₂ ports for Y consecutive periods, where X, Y, and K are each a positive integer, and Q₁ and Q₂ are different positive integers.

In an embodiment, the reception module 31 is configured to semi-persistently receive the K sets of reference signals, where the K sets of reference signals have the same number of ports, and K is a positive integer.

In an embodiment, the reception module 31 is configured to receive K sets of reference signals of W₁ ports for S consecutive periods and then receive K sets of reference signals of W₂ ports for L consecutive periods. S, L, and K are each a positive integer, and W₁ and W₂ are different positive integers.

In an embodiment, a consecutive period of semi-persistently receiving the K sets of reference signals is C periods, and semi-persistently receiving the K sets of reference signals by the reception module 31 includes one of the following: transmitting the K sets of reference signals of the W₂ ports in the C-th period; transmitting the K sets of reference signals of the W₁ ports in the C-th period; where C, S, and L are each a positive integer, and S + L ≤ C; or during the semi-persistent period with a duration of C, sending the second target number of K sets of reference signals in the C-th period. W1 and W2 are different positive integers.

In an embodiment, the second target number is determined based on whether C is an integer multiple of the sum of S and L, the size of W₁, and the size of W₂.

In an embodiment, in the case where C is an integer multiple of (S + L), K sets of reference signals of W₁ or W₂ ports are transmitted in the C-th period.

In the case where C is not an integer multiple of the sum of (S + L), K sets of reference signals of W₁ or W₂ ports are transmitted in the C-th period.

The second target number is the larger number of W₁ and W₂.

In an embodiment, in the case where C is an integer multiple of (S + L), the K sets of reference signals of the W₂ ports are transmitted in a C-th period; and in the case where C is not an integer multiple of (S + L), the K sets of reference signals of W₁ or W₂ ports are transmitted in the C-th period according to a preset rule.

In an embodiment, the determination module 32 in the apparatus is configured to determine channel state information of M₁ ports according to a first set of reference signals and transmit the channel state information of the M₁ ports, where the channel state information of the M₁ ports is configured to determine the predicted channel information of the N ports.

In an embodiment, this apparatus also includes a fourth transmission module configured to perform the following: transmitting second indication information, where the second indication information instructs the second communication node to determine predicted channel information corresponding to the N ports or indicates that the first communication node does not determine the predicted channel information corresponding to the N ports.

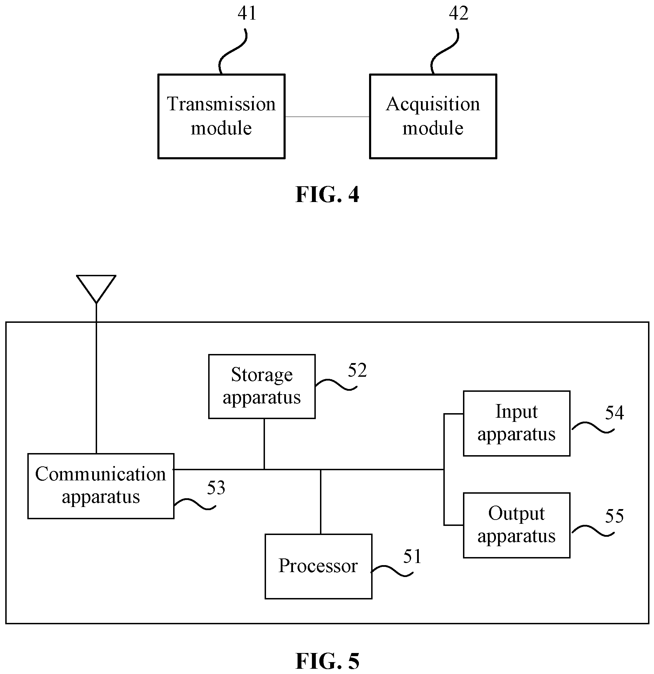

In an exemplary embodiment, the embodiment of the present application provides a transmission apparatus. FIG. 4 is a diagram illustrating the structure of a transmission apparatus according to an embodiment of the present application. The apparatus is integrated into the second communication node and includes a transmission module 41 and an acquisition module 42.

The transmission module 41 is configured to transmit K sets of reference signals, where K is a positive integer. The K sets of reference signals are configured to determine predicted channel information of N ports, where N > M₁ + M₂ + ... + M_{K}, N, M₁, M₂, ..., M_{K} are each a positive integer, and Mₖ denotes the number of ports corresponding to the k-th set of reference signals.

The acquisition module 42 is configured to acquire channel state information of the N ports or channel information of the N ports.

The transmission apparatus provided in this embodiment is configured to perform the transmission method of the embodiment shown in FIG. 2a. The transmission apparatus provided in this embodiment has implementation principles and technical effects similar to the transmission method of the embodiment shown in FIG. 2a, which are not repeated here.

Based on the preceding embodiments, variant embodiments of the preceding embodiment are provided. It is to be noted here that for ease of description, only differences from the preceding embodiment are described in the variant embodiments.

In an embodiment, the acquisition module 42 is configured to perform the following: receiving first channel information; and determining the predicted channel information corresponding to the N ports according to the first channel information; determining the channel state information of the N ports according to the predicted channel information corresponding to the N; where the first channel information is channel information of M₁ ports, M₁ and N are each a positive integer, and M1 < N.

In an embodiment, the acquisition module 42 is configured to perform the following: receiving the channel state information of the N ports fed back by a first communication node.

In an embodiment, the acquisition module 42 is configured to perform the following: receiving first channel information; and determining the predicted channel information corresponding to the N ports according to the first channel information; where the first channel information is channel information of M₁ ports, M₁ and N are each a positive integer, and M₁ < N; or the first channel information is channel information of Mₛ ports, Mₛ is a positive integer, and Mₛ < M₁ < N.

In an embodiment, the acquisition module 42 is configured to perform the following: receiving the channel state information of M₁ ports; determining the predicted channel information corresponding to the N ports based on the channel state information of M₁ ports; and determining the channel state information of the N ports according to the predicted channel information corresponding to the N ports.

In an embodiment, the K sets of reference signals have the same quasi-co-location configuration.

In an embodiment, the predicted channel information of the N ports is determined by the first communication node.

In an embodiment, the channel state information includes a first type of precoding information or a second type of precoding information.

In an embodiment, the apparatus also includes a first reception module.

The first reception module is configured to receive first indication information, where the first indication information is configured to indicate the type of transmitted information.

In an embodiment, the apparatus also includes a second reception module.

The second reception module is configured to receive the first channel information of Mₛ ports and determine the predicted channel information of N ports based on the first channel information of Mₛ ports, where Mₛ is an integer greater than 1, and M₁ is greater than Mₛ. The first channel information of Mₛ ports is determined based on the first channel information of M₁ ports, such as selected from the first channel information of M₁ ports, and the first channel information of M₁ ports is determined based on the first set of reference signals.

In an embodiment, the apparatus also includes a first sending module configured to send topology configuration information of the ports, where the topology configuration information of the ports includes one or more of the following: the value of Mᵢ and the value of N; the number of rows of Mᵢ ports and the number of columns of the Mᵢ ports; the number of rows of the N ports and the number of columns of the N ports; position information of Mᵢ ports among the N ports; or an arrangement manner of the ports; Mᵢ and N are each an integer greater than 1, and i is greater than or equal to 1 and less than or equal to K.

In an embodiment, the position information of the Mᵢ ports among the N ports includes one of the following: The Mᵢ ports correspond to ports in one polarization direction among the N ports; the Mᵢ ports correspond to odd-indexed ports among the N ports; the Mᵢ ports correspond to even-indexed ports among the N ports; a row of the Mᵢ ports corresponds to odd-indexed ports or even-indexed ports in a row of the N ports; a column of the Mᵢ ports corresponds to odd-indexed ports or even-indexed ports in a column of the N ports; the Mᵢ ports correspond to odd-row ports or even-row ports among the N ports; or the Mᵢ ports correspond to odd-column ports or even-column ports among the N ports. Mᵢ and N are each an integer greater than 1, and i is greater than or equal to 1 and less than or equal to K.

In an embodiment, the transmission module 41 is configured to periodically send the K sets of reference signals, where the K sets of reference signals have the same number of ports.

In an embodiment, the transmission module 41 is configured to perform the following: sending K sets of reference signals of W₁₁ ports in odd periods; and sending K sets of reference signals of W₁₂ ports in even periods, where K is a positive integer, and W₁₁ and W₁₂ are different positive integers.

In an embodiment, the transmission module 41 periodically sends K sets of reference signals, including cyclically sending the K sets of reference signals in the following manner: sending K sets of reference signals of Q₁ ports for X consecutive periods, and then sending K sets of reference signals of Q₂ ports for Y consecutive periods, where X, Y, and K are each a positive integer, and Q₁ and Q₂ are different positive integers.

In an embodiment, the transmission module 41 is configured to perform the following: semi-persistently sending the K sets of reference signals, where the K sets of reference signals have the same number of ports, and K is a positive integer.

In an embodiment, the transmission module 41 is configured to perform the following: sending K sets of reference signals of M₃₁ ports in odd periods; and sending K sets of reference signals of M₃₂ ports in even periods; and during the semi-persistent period with a duration of C, sending K sets of reference signals for the first target number of ports in the C-th period. M₃₁ and M₃₂ are positive integers.

In an embodiment, the first target number is determined based on the parity of C, the size of M₃₁, and the size of M₃₂.

In an embodiment, when C is an odd number, K sets of reference signals for M₃₁ ports are sent in the C-th period, or K sets of reference signals for M₃₂ ports are sent; when C is an even number, K sets of reference signals for M₃₁ ports are sent in the C-th period, or K sets of reference signals for M₃₂ ports are sent; the first target number is the larger number of M₃₁ and M₃₂.

In an embodiment, the transmission module 41 is configured to perform the following: sending K sets of reference signals of W₁ ports for S consecutive periods, and then sending K sets of reference signals of W₂ ports for L consecutive periods; and during the semi-persistent period with a duration of C, sending the second target number of K sets of reference signals in the C-th period. S, L, and K are each a positive integer, and W₁ and W₂ are different positive integers.

In an embodiment, the second target number is determined based on whether C is an integer multiple of the sum of S and L, the size of W₁, and the size of W₂.

In an embodiment, in the case where C is an integer multiple of the sum of S and L, K sets of reference signals of W₁ or W₂ ports are sent in the C-th period; in the case where C is not an integer multiple of the sum of S and L, K sets of reference signals of W₁ or W₂ ports are sent in the C-th period; the second target number is the larger number of W₁ and W₂.

In an embodiment, in the case where C is an integer multiple of (S + L), the K sets of reference signals of the W₂ ports are transmitted in a C-th period; and in the case where C is not an integer multiple of (S + L), the K sets of reference signals of W₁ or W₂ ports are transmitted in the C-th period according to a preset rule.

In an embodiment, this apparatus also includes a third reception module configured to perform the following: receiving the channel state information of M₁ ports.

In an embodiment, this apparatus also includes a fourth reception module configured to perform the following: receiving second indication information, where the second indication information instructs the second communication node to determine predicted channel information corresponding to the N ports or indicates that the first communication node does not determine the predicted channel information corresponding to the N ports.

In an exemplary embodiment, the embodiment of the present application provides a communication node. The communication node may be one or more of a first communication node and a second communication node. FIG. 5 is a diagram illustrating the structure of a communication node according to an embodiment of the present application. As shown in FIG. 5, the communication node provided in the present application includes one or more processors 51 and a storage apparatus 52. One or more processors 51 are provided in the communication node. In FIG. 5, one processor 51 is used as an example. The storage apparatus 52 is configured to store one or more programs. The one or more programs are executed by the one or more processors 51 to cause the one or more processors 51 to perform the transmission method in the embodiments of the present application. When the communication node is the first communication node, the transmission method described in the embodiment of FIG. 1 of the present application is implemented. When the communication node is the second communication node, the transmission method described in the embodiment of FIG. 2a of the present application is implemented.

The communication node also includes a communication apparatus 53, an input apparatus 54, and an output apparatus 55.

The processor 51, the storage apparatus 52, the communication apparatus 53, the input apparatus 54, and the output apparatus 55 in the communication node may be connected via a bus or other means, with connection via the bus as an example in FIG. 5.

The input apparatus 54 may be configured to receive input digital or character information and generate key signal input related to user settings and function control of the communication node. The output apparatus 55 may include a display device, for example, a display screen.

The communication apparatus 53 may include a receiver and a sender. The communication apparatus 53 is configured to perform information transceiving and communication under the control of the one or more processors 51. The information includes but is not limited to a reference signal, first channel information, first indication information, second indication information, and channel state information.

As a computer-readable storage medium, the storage apparatus 52 may be configured to store software programs, computer-executable programs, and modules, such as program instructions/modules (for example, the request reception module 31 and the determination module 32 that are in the transmission apparatus, or the transmission module 41 and the acquisition module 42 that are in the transmission apparatus) corresponding to the transmission method according to embodiments of the present application. The storage apparatus 52 may include a program storage region and a data storage region, where the program storage region may store an operating system and an application program required by at least one function while the data storage region may store data created depending on use of the communication node. Additionally, the storage apparatus 52 may include a high-speed random-access memory and may also include a nonvolatile memory, such as at least one disk memory device, a flash memory device, or another nonvolatile solid-state memory. In some examples, the storage apparatus 52 may also include memories which are remotely disposed with respect to the processor 51. These remote memories may be connected to the communication node via a network. Examples of the preceding network include but are not limited to, the Internet, an intranet, a local area network, a mobile communication network, and a combination thereof.

The embodiment of the present application also provides a storage medium. The storage medium stores a computer program that, when executed by a processor, causes the processor to perform the transmission method according to any embodiment of the present application, such as the transmission method applied to a first communication node and the transmission method applied to a second communication node. The transmission method applied to the first communication node includes the following steps.

K sets of reference signals are received.

Predicted channel information of N ports is determined according to the K sets of reference signals, where N > M₁ + M₂ + ... + M_{K}, N, M₁, M₂, ..., M_{K} are each a positive integer, and Mₖ denotes the number of ports corresponding to the k-th set of reference signals; k = 1, ..., K, and K is a positive integer.

The transmission method applied to the second communication node includes the following steps.

K sets of reference signals are transmitted, where K is a positive integer.

The K sets of reference signals are configured to determine predicted channel information of N ports, where N > M₁ + M₂ + ... + M_{K}, N, M₁, M₂, ..., M_{K} are each a positive integer, and Mₖ denotes the number of ports corresponding to the k-th set of reference signals.

Channel state information of the N ports or channel information of the N ports is acquired.

The computer storage medium in this embodiment of the present application may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or device, or any combination thereof. Examples of the computer-readable storage medium include (non-exhaustive list) an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical storage element, a magnetic storage device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included on the computer-readable medium may be transmitted on any suitable medium including, but not limited to, a wireless medium, a wire, an optical cable, a radio frequency (RF), or any suitable combination thereof.

Computer program codes for performing the operations of the present application may be written in one or more programming languages or a combination of multiple programming languages. The programming languages include object-oriented programming languages such as Java, Smalltalk, and C++ and may also include conventional procedural programming languages such as "C" or similar programming languages. The program codes may be executed entirely on a user computer, partly on a user computer, as a stand-alone software package, partly on a user computer and partly on a remote computer, or entirely on a remote computer or a server. In a case related to the remote computer, the remote computer may be connected to the user computer via any type of network including a local area network (LAN) or a wide area network (WAN) or may be connected to an external computer (for example, via the Internet by an Internet service provider).

The above descriptions are only example embodiments of the present application and are not intended to limit the scope of the present application.

It is to be understood by those skilled in the art that the term terminal device encompasses any appropriate type of radio user equipment, such as a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another calculation apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented using any suitable data storage technology such as, but not limited to, a read-only memory (ROM), a random-access memory (RAM), or an optical memory device and system (a digital video disc (DVD), or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A transmission method, applied to a first communication node, comprising:
receiving K sets of reference signals; and
determining predicted channel information of N ports according to the K sets of reference signals, wherein N > M₁ + M₂ + ... + M_{K}, N, M₁, M₂, ..., M_{K} are each a positive integer, and Mₖ denotes a number of ports corresponding to a k-th set of reference signals, wherein k = 1, ..., K, and K is a positive integer.

2. The method of claim 1, wherein
the K sets of reference signals have a same quasi-co-location configuration.

3. The method of claim 1, wherein determining the predicted channel information of the N ports according to the K sets of reference signals comprises:
determining i-th channel information Hᵢ of Mᵢ ports according to an i-th set of reference signals, wherein i = 1, ..., K; and
determining the predicted channel information of the N ports according to the i-th channel information Hᵢ;
wherein Mᵢ is a positive integer, i = 1, ..., K, and K is a positive integer.

4. The method of claim 1, wherein determining the predicted channel information of the N ports according to the K sets of reference signals comprises:
determining i-th channel information Hᵢ of Mᵢ ports according to an i-th set of reference signals;
determining i-th predicted channel information Pᵢ of Nᵢ ports according to the i-th channel information Hᵢ, wherein i = 1, ..., K; and
combining the i-th predicted channel information Pᵢ to obtain the predicted channel information of the N ports;
wherein Nᵢ and Mᵢ are each a positive integer, Nᵢ is not less than Mᵢ, i = 1, ..., K, and K is a positive integer.

5. The method of claim 1, wherein determining the predicted channel information of the N ports according to the K sets of reference signals comprises:
determining first channel information of M₁ ports according to a first set of reference signals;
determining second channel information of M₂ ports according to a second set of reference signals; and
determining the predicted channel information of the N ports according to the first channel information and the second channel information, wherein K = 2, M₁, M₂, and N are each a positive integer, and M₁ + M₂ ≤ N.

6. The method of claim 1, wherein determining the predicted channel information of the N ports according to the K sets of reference signals comprises:
determining first channel information of M₁ ports according to a first set of reference signals;
determining second channel information of M₂ ports according to a second set of reference signals;
determining first predicted channel information of N₁ ports according to the first channel information;
determining second predicted channel information of N₂ ports according to the second channel information; and
combining the first predicted channel information and the second predicted channel information to obtain the predicted channel information of the N ports, wherein K = 2, N₁ and N₂ are each a positive integer, N₁ + N₂ = N, and M₁ and M₂ satisfy at least one of the following conditions: M₁ < N₁ or M₂ < N₂.

7. The method of claim 1, wherein determining the predicted channel information of the N ports according to the K sets of reference signals comprises:
determining first channel information of M₁ ports according to the K sets of reference signals; and
determining the predicted channel information of the N ports according to the first channel information, wherein K = 1, M₁ and N are each a positive integer, and M₁ < N.

8. The method of claim 1, further comprising:
determining channel state information of the N ports according to the predicted channel information of the N ports; and
transmitting the channel state information of the N ports.

9. The method of claim 8, wherein the channel state information comprises a first type of precoding information or a second type of precoding information.

10. The method of claim 1, wherein determining the predicted channel information of the N ports according to the K sets of reference signals comprises:
determining first channel information of M₁ ports according to a first set of reference signals, and transmitting the first channel information of the M₁ ports;
wherein the first channel information of the M₁ ports is configured to determine the predicted channel information of the N ports, M₁ and N are each an integer greater than 1, M₁ is less than N, and K = 1.

11. The method of claim 1, wherein determining the predicted channel information of the N ports according to the K sets of reference signals comprises:
determining first channel information of M₁ ports according to a first set of reference signals;
determining first channel information of Mₛ ports according to the first channel information of the M₁ ports; and
transmitting the first channel information of the Mₛ ports, wherein the first channel information of the Mₛ ports is configured to determine the predicted channel information of the N ports, M₁ and Mₛ are each an integer greater than 1, M₁ is greater than Mₛ, and K = 1.

12. The method of any of claims 8 to 11, further comprising:
transmitting first indication information, wherein the first indication information is configured to indicate a type of transmitted information.

13. The method of claim 1, further comprising:
acquiring topology configuration information of ports, wherein the topology configuration information of the ports comprises at least one of the following:
a value of Mᵢ and a value of N;
a number of rows of Mᵢ ports and a number of columns of the Mᵢ ports;
a number of rows of the N ports and a number of columns of the N ports;
position information of Mᵢ ports among the N ports; or
an arrangement manner of the ports;
wherein Mᵢ and N are each an integer greater than 1, and i is greater than or equal to 1 and less than or equal to K.

14. The method of claim 13, wherein the position information of the Mᵢ ports among the N ports comprises one of the following:
the Mᵢ ports correspond to ports in one polarization direction among the N ports;
the Mᵢ ports correspond to odd-indexed ports among the N ports;
the Mᵢ ports correspond to even-indexed ports among the N ports;
a row of the Mᵢ ports corresponds to odd-indexed ports or even-indexed ports in a row of the N ports;
a column of the Mᵢ ports corresponds to odd-indexed ports or even-indexed ports in a column of the N ports;
the Mᵢ ports correspond to odd-row ports or even-row ports among the N ports; or
the Mᵢ ports correspond to odd-column ports or even-column ports among the N ports;
wherein Mᵢ and N are each an integer greater than 1, and i is greater than or equal to 1 and less than or equal to K.

15. The method of claim 1, wherein receiving the K sets of reference signals comprises:
periodically receiving the K sets of reference signals, wherein the K sets of reference signals have a same number of ports.

16. The method of claim 15, wherein periodically receiving the K sets of reference signals comprises:
receiving K sets of reference signals of Q₁ ports for X consecutive periods, and then receiving K sets of reference signals of Q₂ ports for Y consecutive periods, wherein X, Y, and K are each a positive integer, and Q₁ and Q₂ are different positive integers.

17. The method of claim 1, wherein receiving the K sets of reference signals comprises:
semi-persistently receiving the K sets of reference signals, wherein the K sets of reference signals have a same number of ports, and K is a positive integer.

18. The method of claim 17, wherein semi-persistently receiving the K sets of reference signals comprises:
receiving K sets of reference signals of W₁ ports for S consecutive periods, and then receiving K sets of reference signals of W₂ ports for L consecutive periods;
wherein S, L, and K are each a positive integer, and W₁ and W₂ are different positive integers.

19. The method of claim 18, wherein a consecutive period of semi-persistently receiving the K sets of reference signals is C periods, and semi-persistently receiving the K sets of reference signals comprises one of the following:
transmitting the K sets of reference signals of the W₂ ports in the C-th period; and
transmitting the K sets of reference signals of the W₁ ports in the C-th period;
wherein C, S, and L are each a positive integer, and S + L ≤ C.

20. The method of claim 18, wherein
in a case where C is an integer multiple of (S + L), transmitting the K sets of reference signals of the W₂ ports in a C-th period; and
in a case where C is not an integer multiple of (S + L), transmitting the K sets of reference signals of W₁ ports or W₂ ports in the C-th period according to a preset rule.

21. The method of claim 1, wherein determining the predicted channel information of the N ports according to the K sets of reference signals comprises:
determining channel state information of M₁ ports according to a first set of reference signals, and transmitting the channel state information of the M₁ ports, wherein the channel state information of the M₁ ports is configured to determine the predicted channel information of the N ports.

22. A transmission method, applied to a second communication node, comprising:
transmitting K sets of reference signals;
wherein the K sets of reference signals are configured to determine predicted channel information of N ports, wherein N > M₁ + M₂ + ... + M_{K}, N, M₁, M₂, ..., M_{K} are each a positive integer, Mₖ denotes a number of ports corresponding to a k-th set of reference signals, k = 1, ..., K, and K is a positive integer; and
acquiring channel state information of the N ports or channel information of the N ports.

23. The method of claim 22, wherein acquiring the channel state information of the N ports comprises:
receiving first channel information;
determining the predicted channel information corresponding to the N ports according to the first channel information; and
determining the channel state information of the N ports according to the predicted channel information corresponding to the N ports;
wherein the first channel information is channel information of M₁ ports, M₁ and N are each a positive integer, and M₁ < N; or the first channel information is channel information of Mₛ ports, Mₛ is a positive integer, and Mₛ < M₁ < N.

24. The method of claim 22, wherein acquiring the channel state information of the N ports comprises:
receiving the channel state information of the N ports fed back by a first communication node.

25. The method of claim 22, wherein acquiring the channel information of the N ports comprises:
receiving first channel information; and
determining the predicted channel information corresponding to the N ports according to the first channel information;
wherein the first channel information is channel information of M₁ ports, M₁ and N are each a positive integer, and M₁ < N; or the first channel information is channel information of Mₛ ports, Mₛ is a positive integer, and Mₛ < M₁ < N.

26. A communication node, comprising:
at least one processor; and
a storage apparatus configured to store at least one program;
wherein the at least one program, when executed by the at least one processor, causes the at least one processor to implement the method of any one of claims 1 to 25.

27. A storage medium storing a computer program that, when executed by a processor, causes the processor to implement the method of any one of claims 1 to 25.
